# EUROPÄISCHE PATENTSCHRIFT

(11) **EP 2 027 747 B1**
(45) Veröffentlichungstag und Bekanntmachung des Hinweises auf die Patenterteilung: **15.06.2011**
(21) Anmeldenummer: 08700985.8
(22) Anmeldetag: 04.01.2008
(51) Int. Cl.: H04W 36/00

(54) **"NETSURFING" IN VOIP-ANRUFEN MITTELS MANAGED HANDOVERS (MHOS)**
NETSURFING IN VOIP CALLS BY MEANS OF MANAGED HANDOVERS (MHOS)
NAVIGATION SUR LE NET DANS UN APPEL VOIP À L'AIDE D'UN TRANSFERT GÉRÉ (MHOS)

(30) Priorität: 12.02.2007 DE 102007007701; 12.02.2007 US 889341 P; 16.03.2007 DE 102007013542; 16.03.2007 US 895238 P; 19.03.2007 DE 102007013550; 19.03.2007 US 895592 P; 23.03.2007 DE 102007014937; 23.03.2007 US 896541 P; 05.04.2007 DE 102007017391; 05.04.2007 US 910384 P; 25.04.2007 DE 102007020548; 25.04.2007 US 913861 P; 02.05.2007 DE 102007020986; 02.05.2007 US 915555 P; 18.05.2007 DE 102007023620; 18.05.2007 US 938805 P; 15.11.2007 DE 102007055021; 15.11.2007 US 988246 P; 10.12.2007 DE 102007059757; 10.12.2007 US 12560; 17.12.2007 DE 102007061336; 17.12.2007 US 14157; 21.12.2007 DE 102007063448; 21.12.2007 US 16137; 28.12.2007 DE 102007063506; 28.12.2007 US 17254
(43) Veröffentlichungstag der Anmeldung: 25.02.2009
(60) Teilanmeldung: 11161021.8
(73) Patentinhaber: Sigram Schindler Beteiligungsgesellschaft mbH, 10587 Berlin (DE)
(72) Erfinder: SCHINDLER, Sigram, 14129 Berlin (DE); SCHÖNBERG, Dörte, 10553 Berlin (DE); SCHULZE, Jürgen, 13595 Berlin (DE); WITKE, Marius, 10439 Berlin (DE); GADOW, Ivo, 10247 Berlin (DE)
(74) Vertreter: Müller, Wolfram Hubertus
(86) Internationale Anmeldenummer: PCT/EP2008/000037
(87) Internationale Veröffentlichungsnummer: WO 2008/098642

## Beschreibung

### Gegenstand der Erfindung

Diese Patentanmeldung offenbart ein "Netsurfing"-Verfahren für ein Endsystem A0 - mit einem realen oder virtuellen A0-homeIAD0 und einer A0-Verbindung zu einem zweiten Endsystem Z0 - zu dessen "Managed Handover" MHO an ein reales IADx in einem WLANx oder an ein virtuelles IADx für ein Mobilnetzx (IAD = Integrated Access Device). Das MHO wird unterstützt durch das A0-homeIAD0.

Eine A0-Verbindung ist oft über einen MHO-Modul MHOM relayt, der von der MHO-Spezifikation MHOS im A0-homeIAD0 gesteuert ist. Dies bietet sowohl Betreibern von sharedIADx/A0-homeIAD0 als auch Benutzern deren homeEndsystemen Vorteile.

Ein MHOM (ein-/oder ausschließlich MHOS) unterscheidet sich wesentlich von einem "Home Agent" der Internet-Mobilitäts-Technik und kann deshalb auch heutige WiFi-IFMC-Telefone unterstützen. D.h.: Das Netsurfing-Verfahren ist kurzfristig auf die VoIP-Telefonie abgestellt - aber nicht darauf beschränkt.

### A. Abgrenzung des Standes der HO-Technik gegenüber dem Netsurfing-Verfahren

Den Stand der Technik beim "seamless HO" legt die US 2006/0099948 A1 in ihrem BACKGROUND-Abschnitt und der Beschreibung ihres Verfahrens zutreffend dar, speziell beim "Media Independent Handover" (MIH). Die verschiedenen technischen HO-Varianten erörtern - noch breiter angelegt - die "IEEE802.21-Übersichts-Publikation" von V. Gupta et al. (DCN 21-06-0706-00-0000), ebenso wie der UCLA CSD-TR No. 040012 von L.-J. Chen, ebenso wie die Arbeit von G.A. Mills-Tetty et al. ("Mobile Voice over IP (MVOIP) ......", Proc. of the 21. IEEE International Performance, Computing, and Communications Conference, 2002), ebenso wie E. Edvardsen et al. ("Open Access Networks", Telenor Research and Development, 2002) oder H. Almus ("Open Broadband Access Networks", TERENA Networking Conference 2006) oder P.A. Frangoudis ("Experimental evaluation of community-based WLAN voice and data services", ICST 978-963-06-2670-5). Das umfassende Instrumentarium der Internet-Mobilitäts-Technik für eine zukünftige HO-Technik erörtert die einschlägige und lückenlose Übersicht des Buchs von J. Schiller ("Mobile Communications", Addison-Wesley, 2003).

Diese Arbeiten beschreiben den Stand der HO-Technik akribisch und zeigen so, dass er die innovativen Merkmale des Netsurfing-Verfahrens nicht verwirklicht, d.h. dessen Merkmale geeignet zu sein
■ zur MHO-Unterstützung heutiger WiFi- oder FMC-Telefone und sharedWLAN-IADs, durch seinen Verzicht auf heute (noch) nicht WiFi-/FMC-Telefon-übliche Technik und insbesondere
■ zur Vorteils-Erbringung für homeIAD-/sharedIAD-Betreiber und Endsystem-Benutzer, bei Abschirmung solcher Vorteils-Nutzungen gegenüber jedem weiteren Netzbetreiber.

Das Dokument GB2287614 A beschreibt den Handover eines Sprachkanals. Der Nutzer erhält von seiner Mobilstation eine Mitteilung, daß der Sprachkanal gewechselt werden muß, und daraufhin wählt der Nutzer mittels eines Schalters für die Handovereinstellungen aus, ob der Handover unterbunden werden soll oder nicht. Außerdem empfängt die Mobilstation nach jedem beendeten Anruf eine Nachricht mit Gebühreninformationen vom Netzwerk und berechnet akkumulierte Gesprächsgebühren.

Die vorliegende Erfindung löst die Probleme im vorliegenden Stand der Technik gemäß den Merkmalen des Verfahrensanspruchs 1 und des dazu korrespondierenden Vorrichtungsanspruchs 8.

Das Netsurfing-Verfahren weist gegenüber der Internet-Mobilitäts-Technik und dem "HOCIS-Verfahren" (WO 2008/064918) mindestens je ein zusätzliches technisches Merkmal auf: Das ist sein möglicherweise Tunnel-freies Relaying (d.h. obiges erstes Merkmal) bzw. seine technische Kommunikation zur Realisierung einer Geschäfts-Maßnahme eines homeIAD-Ishared-IAD-Betreibers - die i.d.R. zu beiden Endsystem-Benutzem in einem VoIP-Anruf erfolgt, i.d.R. mittels unterschiedlicher Nachrichten an beide, und zwar gezielt anlässlich des HOs eines von ihnen und dann Convenience-Information-korreliert (d.h. obiges zweites Merkmal). Beide technische Merkmale - das Tunnel-freie Relaying bzw. eine zusätzliche, technisch "Convenience-Information"-korrelierte (Geschäfts-) Kommunikation - verwirklicht weder der Stand der HO-Technik noch der der Internet-Mobilitäts-Technik (letztere mit ihren in eine ähnliche Richtung gehenden WO 2006/031379 A1 und WO 2006/031384 A1, die jedoch u.A. eine Telefonie-/VoIP-Anwendung klar ausschließen) noch das HOCIS-Verfahren noch eines der "Sponsored-Call"-Verfahren (siehe z.B. "Rich Multimedia Applications on IMS Framework", August 2007, oder "ARGELA Multimedia Sponsored Call White Paper", auf den jeweiligen Websites).

### B. Grundsätzliche Beschreibung der Erfindung mittels einfachsten Beispielen

Diese Patentanmeldung offenbart ein "Netsurfing"-Verfahren für ein Endsystem A0 - mit einem realen oder virtuellen A0-homeIAD0 und einer A0-Verbindun zu einem zweiten Endsystem Z0 - zu dessen "Managed Handover" MHO an ein reales IADx in einem WLANx oder an ein virtuelles IADx für ein Mobilnetzx (IAD = Integrated Access Device). Das MHO wird unterstützt durch das A0-homeIAD0.

Eine A0-Verbindung ist oft über einen MHO-Modul MHOM relayt, der gemäß einer MHO-Spezifikation MHOS im A0-homeIAD0 gesteuert ist (beider Implementierungen verteilt oder lokal), was sharedIADx/A0-homeIAD0-Betreibem und Benutzern deren homeEndsystemen Vorteile bietet. Die MHOS ist A0-homeIAD0-Betreiber-privat und ggf. homeEndsystem-individuell. Diese Relay-Steuerung bietet Vorteile:
■ einem sharedIADx-Betreiber hinsichtlich eines Netsurfers in A0: Letzterer ist kein rechtliches Risiko mehr für ihn, da für A0 das homeIAD0 identifizierbar und damit dessen Betreiber für einen Internet-Missbrauch durch A0 rechtlich verantwortlich ist.
■ einem homeIAD0-Betreiber und allen mit ihm kooperierenden sharedIADx-Betreibern, z.B.
   o MHO-Varianten des Netsurfings der IAD0-/sharedIADx-homeEndsysteme und damit einhergehende erhebliche Kostensenkungs-/Qualitätssteigerungs-Potentiale deren Betriebs,
   o Geschäfts-Möglichkeiten für homeIAD0-/sharedWLANx-Betreiber durch "CI-Korrelation" ihrer Nachrichten mit Aufnahmebereitschaft- und Sympathie-kreierenden "HOCIS"-Infos und ggf. Übermittlung dieser nicht nur an den Netsurfer sondern auch an dessen Gesprächspartner - und zwar jeweils technisch und inhaltlich bedürfnisgerecht, d.h. verschieden, konzipiert,
   o Sicherheit der Nutzung solcher Vorteile (d.h. deren Nutzung ist unabhängig von Dritten, ggf. sogar unsichtbar für sie, z.B. intermediäre Netzbetreiber) - was aber eine Unterstützung des Wsurfing-Verfahrens durch Andere, z.B. einen Netzbetreiber, nicht ausschließt.
■ den Endsystem-Benutzem, weil sie - aus den eben genannten Gründen - mehr offene sharedWLANs finden und ihre MHOs u.A. zu diesen sharedWLANs für sie komfortabler sind als bisher, vor allem wegen ihrer "CI-Korrelation".

Die Funktionalität eines MHOMs (ein- oder ausschließlich MHOS) ist gegenüber der des "Home Agents" der Internet-Mobilitäts-Technik auf der L3-L7 des OSI-RMs beschränkt/erweitert, um dieses HO-Management auch mit heutigen WiFi-/FMC-Telefonen und sharedWLANs praktizieren zu können, die kein geeignetes Tunneling beherrschen, und/oder die o.g. Vorteile nutzen zu können. D.h.: Das Netsurfing-Verfahren zielt kurzfristig auf die VoIP-Telefonie ab und noch spezifischer auf das "WLANsurfing" alias "Wsurfing" in VoIP-Anrufen, das die Beispiele dieses Abschnitts **B.** prägt, auf dessen Sicherheit/Privacy (siehe Abschnitt **C.**) und auf dessen Geschäfts-Nutzung - ist aber auf nichts dergleichen beschränkt.

Um dies zu unterstreichen, wird auf die Nutzungsmöglichkeit des Wsurfing-Verfahrens z.B. im Kontext der IP-TV-Übertragung - statt VoIP-Übertragung oder diese begleitend - hingewiesen, oder etwa im Kontext einer Sicherheit-orientierten Echtzeit-Begleitung des Benutzers von A0. In allen solchen Kommunikationsanwendungen sind alle nachfolgenden Ausführungen zum Wsurfing/Netsurfing gleichermaßen zutreffend wie bei der VoIP-Kommunikationsanwendung. Letztere kann deshalb als stellvertretend angesehen werden für diese vielen anderen Einsatzmöglichkeiten des/der erfindungsgemäßen VerfahrensNorrichtung, an die deshalb nachfolgend nur noch gelegentlich erinnert wird.

Ein kleines homeIAD kann mindestens einem Endsystem (z.B. einem Telefon und dessen Benutzer) den Zugang zu mindestens einem Netz ermöglichen und in dem o.g. Sinne unterstützen, z.B. zum Internet und/oder PSTN, über einen Zugang zu sich selbst, wobei letzterer erfolgt
■ entweder per Drahtlos-Netz und darin einer beliebig definierbaren Region (z.B. den Erreichbarkeits-Bereich eines IADs oder irgendeine, ggf. die ganze, Region eines GSM-Netzes),
■ oder per physischer Verbindung (z.B. Telefon- oder Koax-Kabel).
Die Realisierung eines WLANs im Sinne dieser Schrift kann auf Basis von z.B. "RFI"- oder "BlueTooth"- oder "Femtocell"- oder "DECT"- oder "Wimax"- oder "GSM/CDMA/UMTS/GPRS/HSPDA/... "-Technik, insbesondere "WiFi"-Technik beruhen, ggf. heterogene IADs (früher fälschlich APs genannt, AP = Access Point) und/oder BSes eines Mobilnetzes (BS = Base Station) umfassen und erstreckt sich auf eine irgendwie definierte Region des Erreichbarkeitsbereichs eines IADs oder einer BS. Ein großer homeIAD/homeServer kann tausenden von Endsystemen Netzzugänge ermöglichen und sie in dem o.g. Sinne unterstützen, also z.B. ein Internet-Server oder ein System an/in einem dieser Netze sein.

Ein MHOM besteht aus abstrakten (= funktionalen) HW-ISW-Komponenten. Er braucht seine abstrakten HW-Komponenten nicht ausschließlich für seine MHOM- alias Netsurfing-Funktionalität zu benutzen, sondern ist dazu geeignet, deren abstrakte Benutzung mit mindestens einem funktionalen Nicht-MHOM zu teilen (= "abstraktes resource sharing" zwischen diesen Moduln, siehe Abschnitt **C.**). Dabei kann ein MHOM in jedem "materiellen" Wirts-System angesiedelt sein - z.B. von einem materiellen IAD oder materiellen System in bzw. an einem Netz bewirtet werden - ohne dass dieses/r dafür eine materielle HW-Erweiterung bräuchte (siehe Ende Abschnitt **C.**). Auch die SW-Komponenten eines MHOMs (in seinem Wirts-System) können anderswo irgendwie kodiert vorliegen - jedoch so, dass vor der Inanspruchnahme einer Funktion einer dieser SW-Komponenten deren für diese Funktion verantwortlichen Teile in semantisch äquivalenten Code übersetzbar und in das Wirts-System ladbar, und damit mittels der o.g. MHOM-HW-Komponenten ausführbar sind. Diese Konzeption eines MHOMs ist für die nachfolgende Diskussion zu eng und im Abschnitt **C.** weiter untergliedert, ist im Moment jedoch ausreichend. Der maßgebliche Fachmann kennt diese Termini/Begriffichkeit.

Das Netsurfing-Verfahren ist eine Kommunikations-Anwendung (gemäß der MHOS), die i.d.R. auf der L7 der OSI-Verbindung/Connection OCO (siehe unten) zwischen A0 und Z0 angesiedelt ist. Unabhängig davon, ob diese MHOM-Funktionalität teilweise oder gänzlich in einem WLANO (dann z.B. in dem es/ihn steuernden IAD0) oder außerhalb (dann z.B. in einem Internet-Server oder einem Netz-System, und damit außerhalb des es/ihn steuernden IAD0) imple mentiert ist, kann sie durch Funktionen in den Endsystemen A0 und/oder Z0 unterstützt werden - was i.d.R. den Komfort des Netsurfings steigert, aber auch verzichtbar ist.

Die oben angesprochene rechtliche Sicherung der sharedWLAN-Nutzungsform des Netsurfings (z.B. eines Mobiltelefons A0 in dessen Anruf bei Z0 kommt dadurch zustande, dass dessen erfindungsgemäße Inanspruchnahme, z.B. eines sharedIAD darin, beschränkt ist auf dessen Nutzung ausschließlich als Router ausschließlich zu einem MHOM mit fester IP-Adresse, also bekanntem Betreiber. Dieser MHOM-Betreiber kann zweifelsfrei einen Verantwortlichen einer über ihn relayten OCO identifizieren (falls er dieses Relaying überhaupt vornimmt, und dann z.B. zu Beginn des Anrufs oder früher - wie ist hier irrelevant, aber der maßgebliche Fachmann kennt dazu geeignete Verfahren). Damit ist dieser MHOM-Betreiber verantwortlich für die Identitäts-Feststellung eines Benutzers eines Drahtlos-Telefons an einem sharedIAD - nicht der Betreiber des letzteren. Man beachte: Davon abweichend sollte der MHOM den zu ihm gerouteten Zugang zum Internet für A0 ermöglichen (und damit für dessen VoIP-Anruf bei Z0), falls es sich um einen Notruf handelt (wobei dies jedoch heute rechtlich völlig ungeklärt ist).

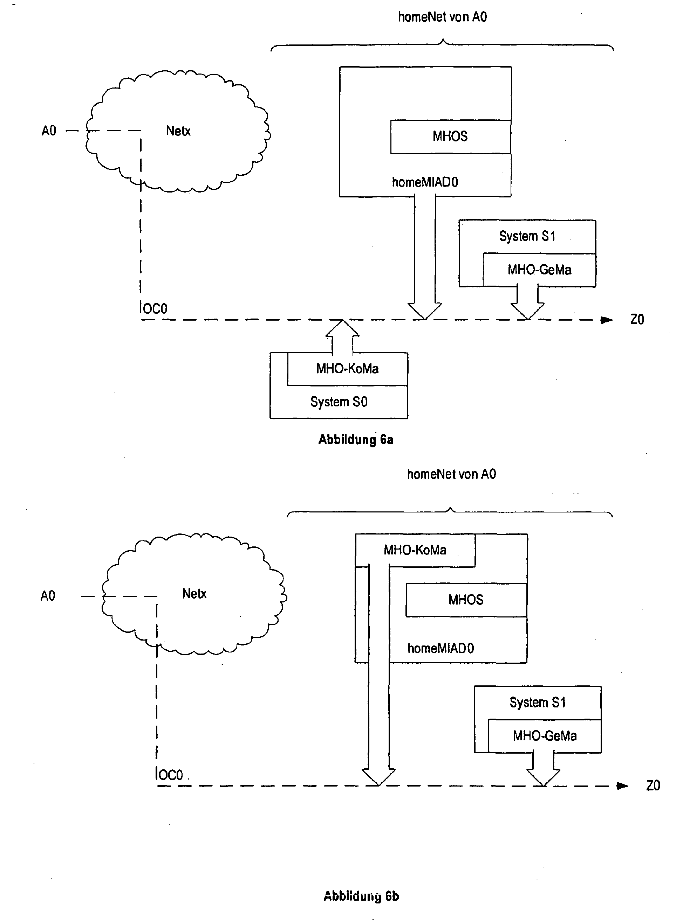

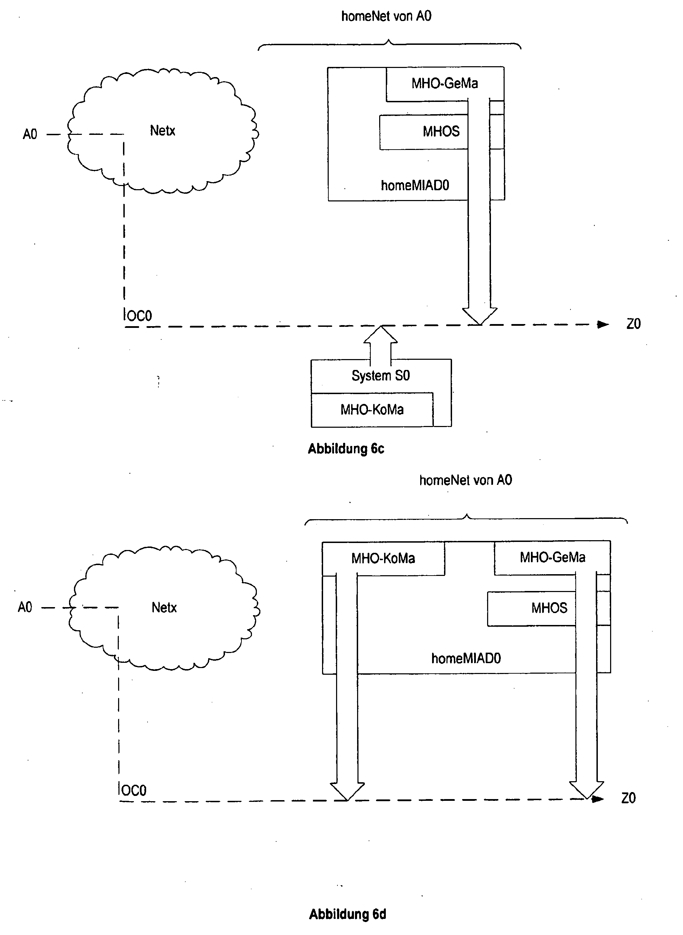

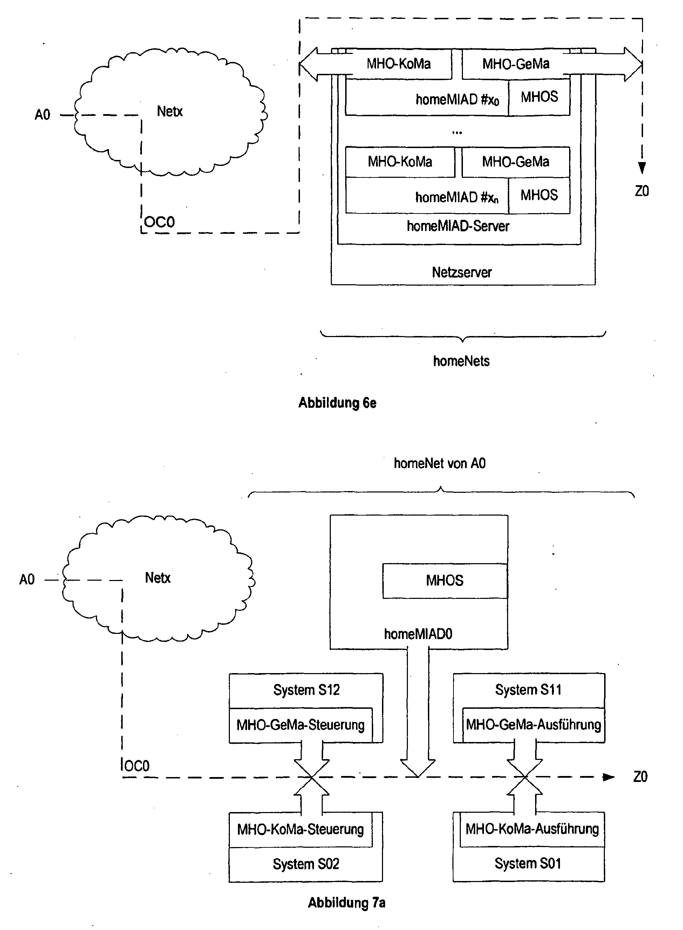

Beispielhafte Realisierungsvarianten dieses rechtlichen Aspekts der Netsurfing-Nutzungsform von sharedIADs werden am Ende dieses Abschnitts **B.** skizziert. Zunächst wird aber die Benutzersicht allein des HO-technischen Kerns des Wsurfing-Verfahrens anhand konkreter Beispiele dargestellt, bei denen der MHOM0 in ein/en homeIAD0/homeServer0 eines Endsystems A0 integriert ist. Varianten der Trennung der dabei eingesetzten Funktionalitäten diskutieren die **Abbildungen 6-8** und deren Erläuterungen im Abschnitt **D..** Den geschäftlichen Kern des Netsufing-Verfahrens und dessen "CI-Korrelation" erläutert der Abschnitt **C.**.

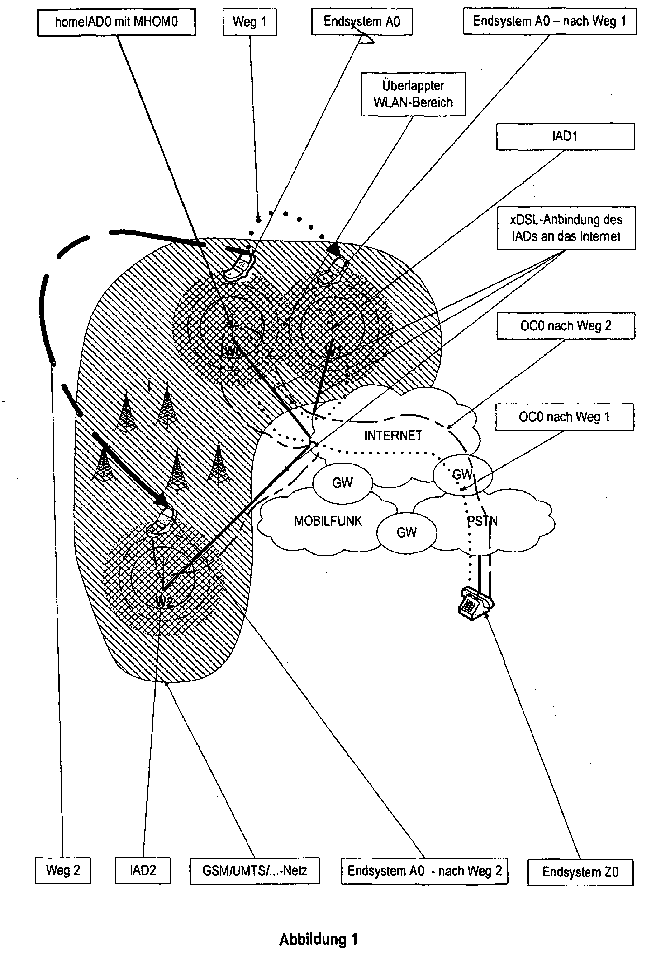

Die einfachsten Wsurfing- alias Netsurfing-Situationen zeigt die **Abbildung 1**: ein unmittelbares bzw. mittelbares MHO des mobilen Endsystems A0 eines TKVs (= Technischer Kommunikationsvorgang, siehe Abschnitt **C.**) - z.B. ein FMC-Telefon und sein Benutzer - von seinem homeWLAN0, kurz: W0, gleichbedeutend homeIAD0, in das zu ihm nicht-disjunkte bzw. das disjunkte W1 bzw. W2 auf dem Weg 1 bzw. 2. Die L7-Verbindung einer dabei ggf. bestehenden OCO zwischen A0 und Z0 bleibt von diesen MHOs auf den Wegen 1 bzw. 2 unberührt. Mindestens eine L3-Verbindung in der A0-OC0 wird jedoch - wenn sich das Endsystem A0 in W1 oder W2 befindet - vom entsprechenden IAD1/IAD2 - erfindungsgemäß über den MHOMO im homeIAD0 des W0 relayt. Einzelh eiten dazu sind von der Internet-Mobilitäts-Technik bekannt (siehe Abschnitt **A.**).

Man beachte, dass hier nirgends eingeschränkt wird, in welcher Weise die(das) jeweilige L3-Verbindung(s-Segment) zwischen dem mobilen Endsystem A0 in W1 oder W2 und dem homeIAD0/homeServer0 von W0 während eines MHOs hergestellt wird: Diese Patentanmeldung umfasst also alle ganz unterschiedlichen möglichen Varianten dieses L3-Verbindungsaufbaus zwischen der L3-Entität in A0 und der im MHOMO. Ist A0 beispielsweise ein Telefon, so kann diese L3-Verbindung insbesondere durch dessen Anruf beim MHOMO zustande kommen oder umgekehrt - oder sie kann von vornherein bestehen (technische Einzelheiten, die dies begünstigen, sind hier irrelevant). Dies gilt auch für den Fall eines "Komplett-Neubeginns" eines Telefonanrufs eines heutigen WiFi-/FMC-Telefons A0 aus einem WLANx heraus bei Z0 zu dessen Realisierung der MHOMO auf der L7 (im IAD0) geeignet konzipiert sein muss.

Nach dieser Erörterung eines "**unmittelbaren MHOs**" - d.h. von einem WLAN unmittelbar zu einem anderen WLAN - ist naheliegend, wie ein "**mittelbares MHO**" erfindungsgemäß funktioniert, bei dem also die beiden WLANs, zwischen denen das Endsystem A0 wechselt, einander räumlich oder zeitlich nicht überlappen (siehe die WLANs W0 und W2 sowie Weg 2 in **Abbildung 1**).

Hier sind zwei Fälle zu unterscheiden:
■ In dem räumlichen oder zeitlichen "Kein-WLAN"-Bereich ist für A0 - aus technischen oder administrativen Gründen - auch kein anderes Netz benutzbar. In diesem Fall kann in der A0-OC0 zu Z0 in diesem Bereich keine Informationsübertragung erfolgen, da sie über keine durchgängige L3-Verbindung zwischen A0 und Z0 verfügt. Die L4-L7-Verbindungen in der A0-OC0 sind davon aber unabhängig und können ggf. bestehen bleiben, sodass die aktuelle Kommunikation zwischen A0 und Z0 mittels der A0-OC0 - also der des suspendierten TKVs - weiterhin besteht und weitergeführt werden kann, sobald A0 in ein WLANx eintritt, mittels dessen IADx zwischen A0 und dem homeIAD0/homeServer0 (und dessen MHOMO) eine "Wsurfing-Verbindung" für die A0-OC0 hergestellt werden kann.
■ In diesem "Kein-WLAN"-Bereich ist ein anderes Netz durch A0 benutzbar, sozusagen ein Wsurfing-Ersatznetz, etwa ein Mobilnetz auf GSM/CDMA/GPRS/HSPDA/...-Basis oder ein Festnetz. Bleibt man bei ersterem Beispiel und nimmt man an, A0 wäre ein FMC-Telefon und hätte Zugang (siehe unten) zu diesem Mobilnetz, so kann zwischen A0 und homeIAD0/homeServer0 (mittels dessen MHOM0) über dieses Mobilnetz eine Wsurfing-Verbindung für A0 herg estellt werden - wie im Einzelnen kann hier wiederum außer Acht gelassen werden. Beim anschließenden Eintritt und Einchecken von A0 in W2 wird dann - ggf. nach einer erfindungsgemäßen Sicherheits-Prüfung im MHOMO - diese Mobilnetz-basierte Wsurfing-Verbindung für A0 ersetzt durch eine Internet-basierte Wsurfing-Verbindung für A0.

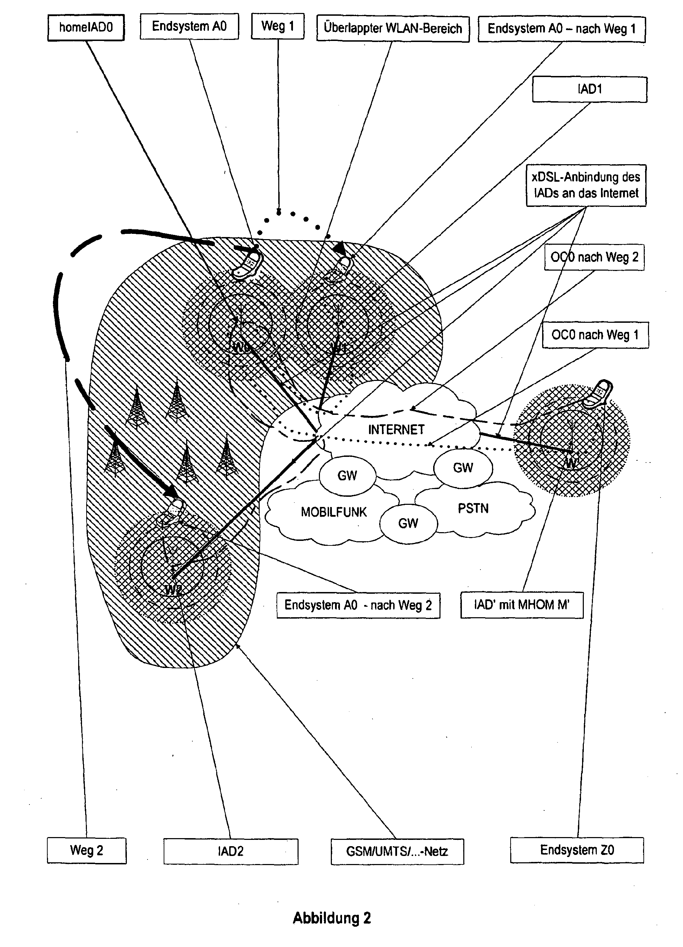

Nach diesen ausführlichen Erörterungen des "rufendes Endsystem"-MHOs von A0, - also des "Rufer-unterstützten Netsurfing", wie es **Abbildung 1** zeigt - ist nahe liegend, dass es auch ein gerufenes Endsystem"-MHO gibt, d.h. das "Gerufenen-unterstützte Netsurfing von A0" (siehe **Abbildung 2**). Für die letztere Netsurfing-Variante gilt das in dem vorstehenden Absatz Gesagte gleichermaßen, wobei hier der MHOM M' z.B. in einem IAD' zwischen dem Internet und dem Endsystem Z0 angesiedelt sein kann. Der M' ermöglicht WLAN-Wechsel von A0 und die Wsurfing-Verbindung zwischen A0 und M' mittels genau der gleichen MHO-Funktionalität wie M, d.h. M' ist ebenfalls ein MHOM - jedoch u.U. unter Minderung des oben skizzierten Internet-Missbrauch-Schutzes.

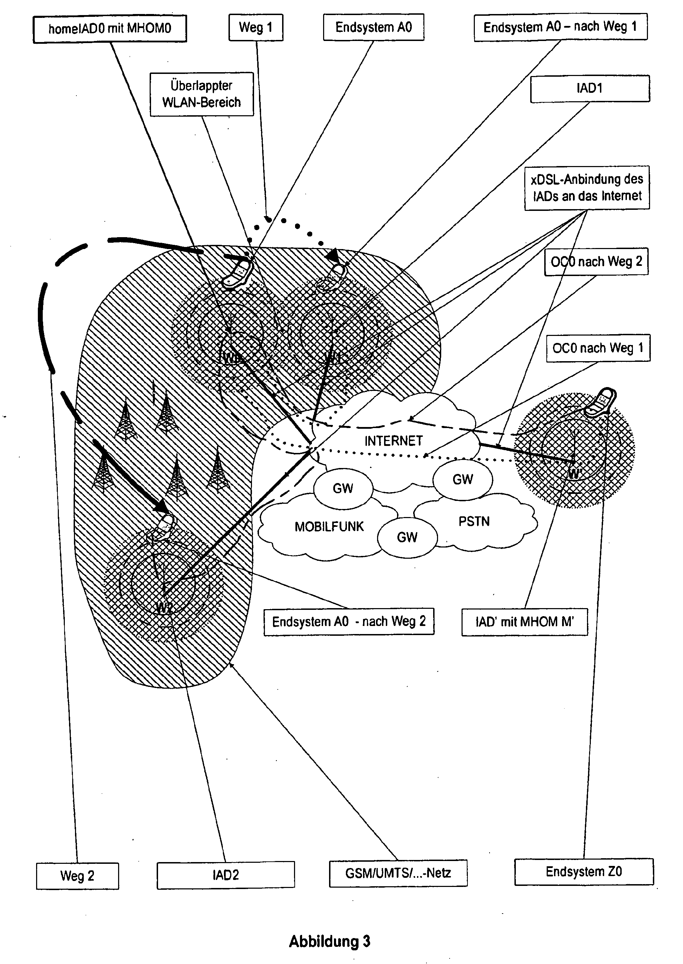

Schließlich sieht man, dass die OC0 zwischen A0 und Z0 selbstverständlich auch bei beiden Endsystemen durch je einen MHOM, also MHOMO und M', unterstützt sein kann (siehe **Abbildung 3**). In diesem Falle können diese beiden MHOMs im Bedarfsfall womöglich selbstverantwortlich ein "Rerouting" der L3-Verbindung der OCO zwischen sich vornehmen - um ihren TKV dadurch z.B. zu verbilligen oder anderweitig zu verbessern.

Kommen wir zurück auf die obige Behauptung, dass das Netsurfing-Verfahren beim Rufer-unterstützten Netsurfing die missbräuchliche Nutzung des Internets erheblich erschwere und allgemeiner auf einige Kommunikations(-Sicherheits)-technische Aspekte des erfindungsgemäßen Verfahrens.

Diese Behauptung zur Internet-Missbrauchserschwernis ist zutreffend, weil jeder solche Missbrauch den leichter identifizierbaren (weil z.B. längerfristig stationären) Betreiber des MHOMs M0 ernsthaft beeinträchtigen kann, sodass dieser Betreiber sich gegen derartige Missbräuche schützen wird, indem er den Zugang zu seinem MHOM nur ihm hinreichend bekannten Personen gewähren wird. Zusätzlich dazu könnte eine Realisierungsvariante zum Einsatz kommen, bei der beispielsweise
■ nur MHOM M0 eine Wsurfing-Verbindung von A0 initiieren kann - nachdem er über deren Sinnhaftigkeit irgendwie anderweitig informiert wurde, etwa über ein "A0 Verfolgungssystem" oder aktiv von A0 per GPRS oder SMS oder .... - sodass ein sharedIAD1 nicht einmal die Möglichkeit hat, die Herstellung einer Wsurfing-Verbindung erfolgreich zu beginnen, weil schon allein jeder solche Versuch vom MHOM M0 im homeIAD0 abschlägig beschieden würde, oder
■ ein mobiles und am IAD1 unbekanntes Endgerät, hier z.B. A0, wenn es das IAD1 zum Wsurfing benutzen will, nicht seinen individuellen MHOM0 festlegt (z.B. durch einen initialen kurzen "Blind-Anruf' bei diesem), sondern dass IAD1 alle solchen Wünsche ihm Unbekannter stereotyp an einen ihm vertrauten Identitätsprüfungs-Server weiterleitet und erst dieser über sich die L3-Verbindung zum MHOMO ggf. herstellt - wobei dieser Identitätsprüfungs-Server dem IAD1 etwa von einem Kreditkarten-Institut oder einem ISP oder einer Einkaufskette oder ... zur Mitbenutzung zur Verfügung gestellt wird.

Das Netsurfing-Verfahren gestattet also die Implementierung ganz unterschiedlicher Verfahren, die einen sharedIAD-Betreiber von allen rechtlichen Risiken beim "VoIPsurfing" oder "IP-TVsurfing", wie man die erfindungsgemäße Technik auch nennen könnte, freistellen. Einschlägige nachgeordnete Sicherheitorientierte Verfahrens-Ansprüche konkretisieren dies beispielsweise. Daraus wird ersichtlich, dass der Schutzbereich des Wsurfing-Verfahrens spezielle Ausführungsformen davon gestattet, die diese bekannten WLANsharing-Risiken praktisch vollständig eliminieren.

In diesem Zusammenhang sei abschließend auf den Kommunikationsstatus KS hingewiesen: Dieser kann sich z.B. zeitlich/örtlich/fremdgesteuert sozusagen "eigenständig" ändern - und damit auch die Zulässigkeit/Nichtzulässigkeit/Sinnhaftigkeit einer Netsurfing-Verbindung zwischen A0 und seinem homeIAD0, auch wenn A0 sich örtlich gar nicht verändert. Mehr dazu enthält **Abschnitt C.** am Ende.

### C. Klärung der Termini/Begriffe und OSI-RM-Beschreibung des Netsurfing-Verfahrens sowie dessen MHOs. GeMa-MHOs und deren "Cl-Korrelation"

Die Beschreibungen des/r erfindungsgemäßen Verfahrens/Vorrichtung in dieser Schrift sind - ebenso wie ihre Termini und Begriffe - rein **funktional**, d.h. völlig **abstrakt**, also absolut unabhängig von einer **materiellen Implementierung**. Aus Gründen ihrer Veranschaulichung werden jedoch gelegentlich auch mögliche materielle Implementierungen dieses Verfahrens, dieser Vorrichtung und dieser Konzepte/Begriffe/Termini erläutert. Dabei ist zu beachten, dass die nachfolgenden Erläuterungen dieser Termini/Begriffe - durchgängig im Sinne des OSI-RMs - lediglich der Klärung (des Wesens) des/r erfindungsgemäßen VerfahrensNorrichtung dienen, also keiner Grundsatzklärung von anderweitigen kommunikationstechnischen Fragen.

Ein Handover (HO) alias ein HO-Vorgang eines Endsystems und seines TKVs - d.h. deren Wechsel - erfolgt zwischen mindestens zwei von entweder Kommunikationsnetzen oder Zugangspunkten eines Netzes oder Leistungsmerkmalen an einem Zugangspunkt eines Netzes. Die vorliegende Erfindung betrachtet also nicht nur "vertikale" HOs, d.h. HOs zwischen verschiedenen Netzen, sondern auch HOs zwischen Zugangspunkten und/oder Leistungsmerkmalen des gleichen Netzes, sog. "horizontale" HOs, und jede Mixtur zwischen allen o.g. HO-Arten.

### Begrifflich (d.h. rein funktional, völlig abstrakt)

■ erfolgt ein abstrakter "**Kommunikationsvorgang**" alias "**Telekommunikationsvorgang, TKV**" zwischen mehreren menschlichen und/oder nicht-menschlichen "**Teilnehmern**" (TLNs) daran, die ihrerseits "**Benutzer**" - oder deren Stellvertreter/Teilfunktionalitäten/Ergänzungsfunktionalitäten sind, wie z.B. Anrufbeantworter, Mailboxes, MP3-Players, IVR-Systeme, Schrift-/Handschrift-/Grafik-/Symbol-/Sprach-/...-/DTMF-Erzeuger/DTMF-Erkenner/Interpreter/Filter aktiver und/oder passiver Art, allgemein: "**Kommunikations-Anwendungssysteme**" (siehe unten) - von "**Endsystemen**" (siehe unten) sind und diesen angehören, wobei diese Endsysteme Zugang zu mindestens einem Netz haben. Netze/Endsysteme/Benutzer bewerkstelligen gemeinschaftlich die (abstrakten) technischen Realisierungen von TKVs.
   Dabei heißt:
   o ein Kommunikationsvorgang alias TKV
      ❖ "**potentiell**", falls für ihn mindestens in einem an ihm beteiligten TKV-Endsystem eine konkrete Maßnahme zwar durchgeführt wurde, aber noch in keinem Gerät seiner TKV-Endsysteme (d.h. erst in mindestens einem TKV-TLN in mindestens einem dieser TKV-Endsysteme, und diese in ihm noch "beliebig vage" sein kann, also z.B. eine Absicht dazu oder sogar nur ein Wunsch oder Bedürfnis),
      ❖ "**aktuell**", falls in mindestens einem solchen Endgerät dies bereits geschah und
      ❖ "**gestartet**" alias "**begonnen**" in jedem der beiden Fälle,
      ❖ "**retrospektiv**" alias "**beendet**", falls für ihn in keinem an ihm beteiligten TKV-Endgerät eine konkrete Maßnahme mehr erfolgt,
      ❖ d.h. er "**besteh**t" alias "**existiert**" in allen diesen Fällen.

      Man beachte, dass ein TKV also spätestens dann begonnen/gestartet wurde, wenn in mindestens einem Endgerät (z.B. einem Telefon) eines seiner Endsysteme mindestens eine ihn betreffende Maßnahme gestartet/begonnen wurde (z.B. das Abheben des Telefonhörers, oder die lokale Ein-/Ausgabe oder auch nur die lokale Auswahl einer Telefonnummer eines Anzurufenden durch einen an dem TKV irgendwie Beteiligten, oder der manuelle oder automatische Start eines Timers bei dessen Ablauf ein Anruf erfolgt, oder...).
   o ein aktueller TKV
      ❖ so lange "**im Verbindungsaufbau**" befindlich, bis ein TLN-Daten-Austausch in ihm begonnen hat,
      ❖ "**anlaufend**", sobald dieser TLN-Daten-Austausch begonnen hat, und
      ❖ "**taufend**", sobald der TLN-Informations-Austausch begonnen hat,
      wobei ein "**Austausch**" begonnen hat, sobald der Austausch mindestens eines "**TLN-Datums**" oder einer "**TLN-information**" eines TKV-TLNs zwischen mindestens einem TKV-Endsystem und mindestens einem von diesem aktuell benutzten Netz begonnen hat. Dabei ist ein TLN-Datum bzw. eine TLN-Information eine letztendlich/ursprünglich TLN-wahrnehm-/erzeugbare Information, die mittels dieses Endsystems an/von diesen/m (nicht-menschlichen oder menschlichen) TLN ausgegeben wird bzw. eingegeben oder ausgewählt wurde.
      Der Unterschied zwischen einem TLN-Datum und einer TLN-Information besteht darin, dass
   o TLN-Daten i.d.R. nur zur ggf. erforderlichen Verwaltung (= Herstellung, Unterbrechung, ..., Beendigung) eines TKVs bzw. dessen OSI-Connection bzw. deren Li-Verbindungen, also 1.d.R. während eines Li-Verbindungsaufbaus und/oder Anlaufens, dagegen
   o TLN-Informationen zur Zweckerfüllung eines TKVs, also während dessen Laufens - d.h. nicht mehr zu dessen Technik-Herstellung/-Management, wie vorstehend -
   ausgetauscht werden, in beiden Fällen zwischen dessen (ggf. jeweiligen) TLNs oder o.g. Stellvertretern/Teilfunktionalitäten/... .
■ sind die in dieser Patentanmeldung verwandten kommunikationstechnischen Konzepte/Begriffe/Termini definiert im international standardisierten "*ISO 7498-1, Information technology - Open Systems Interconnection - Basic Reference Model: The basic model*", kurz: **ISO/OSI-Referenzmodell** oder **OSI-RM**. Es bildet für den maßgeblichen Fachmann die verbindliche gedankliche/konzeptionelle Grundlage dieser Patentanmeldung.
   Die Wortlaute des/der erfindungsgemäßen Netsurfing-Verfahrens/-Vorrichtung in den meisten Ansprüchen beruhen - trotz ihrer "pseudo-natürlich-sprachlichen" Abfassung - auf der im OSI-RM definierten Begrifflichkeit/Terminologie, haben also schon die kommunikationstechnischen Präzisierungen/Beschränkungen des OSI-RMs erfahren, die viele Unbestimmtheiten ihrer "rein natürlich-sprachlichen" Bedeutungen eliminieren.
   Noch weitergehend benutzt die Beschreibung des/der erfindungsgemäßen Netsurfing-Verfahrens/-Vorrichtung OSI-RM-Termini/Begriffe, wie z.B. OSI-Connections/PDUs/SDUs/Layers/Li-Connections/..., die zur "künstlichen" Terminologie/Begrifflichkeit des OSI-RMs gehören - also in den pseudo-natürlich-sprachlichen Wortlauten/Sinngehalten der Ansprüche vermieden sind. Damit macht die Beschreibung Gebrauch von der Unmissverständlichkeit des Artikulationsvermögens des maßgeblichen Fachmanns per OSI-RM-Kunstworten/Kunstbegriffen (von denen einige beispielsweise gerade genannt wurden). Dies wird der maßgebliche Fachmann als behilflich ansehen zur Selbst-Vergewisserung seines korrekten Verständnisses der pseudo-natürlich-sprachlichen Wesens-Beschreibung des/der Netsurfing-Verfahrens/- Vorrichtung in ihren jeweiligen Hauptansprüchen.
   Zum nachfolgenden Gebrauch der OSI-Terminologie/Begrifflichkeit und speziell zu den OSI-RM-Kunstworten/-begriffen in dieser Schrift sei vorab angemerkt, dass letztere erstere
   o einerseits nicht vollständig rekapitulieren kann, sodass ersatzweise auf den o.g. internationalen Standard verwiesen wird, wobei im Zweifelsfall diese Schrift maßgeblich ist, und
   o andererseits an einigen Stellen hinsichtlich der Gegebenheiten bei einem MHO etwas vereinfacht/vergröbert (siehe unten und Abschnitt **D.**).

   Und schließlich wird noch betont, dass der Rückgriff auf die OSI-RM-Terminologie/Begrifflichkeit in dieser Patentanmeldung unerlässlich ist: Der in der Praxis heute dominierende "Internet-Jargon" verfügt bei weitem nicht über die für Rechtsdokumente wünschenswerte Begriffsbestimmtheit - um die zu erzielen, dem schon immer üblichen kommunikationstechnischen Sprach-/Begriffswirrwarr gegenüber jedenfalls zu verbessern, das OSI-RM letztendlich entwickelt wurde. Die Begriffsbestimmungen dieser Patentanmeldung dienen dabei nicht allein der Festlegung ihrer Hauptanspruchs-Sinngehalte, sondern auch der Verständnis-Erleichterung/-Präzisierung ihrer Beschreibungen des/der erfindungsgemäßen Verfahrens/Vorrichtung - und vor allem dem Konterkarieren möglicher Umgehungsversuche des beantragten Schutzbereichs, die darin bestünden, ihn mittels Beschränkungen verkleinern zu wollen nur weil diese in der vorliegenden Patentanmeldung nicht als unzulässig ausgewiesen sind, eben mittels dieser Beschreibungen.
   Übrigens darf nicht verwechselt werden die im vorstehenden Absatz betonte
   o Unerlässlichkeit des Rückgriffs auf das OSI-RM
   o mit der auch dem OSI-RM zugrundeliegenden Einsicht, dass eine klare Beschreibung eines komplexen Systems - irgend einer Provenienz - ohnehin deren Abstraktion von dessen vielen (materiellen) Implementierungs-Details und deren unbedingte Fokussierung auf dessen (so abstrahierende = abstrakte) Funktionalität erfordert.
   Vielmehr konnte und kann das OSI-RM überhaupt erst auf dieser Grundlage - also bei Beachtung des letztgenannten Erfordernisses - die elementaren Konzepte, Begriffe und Termini definieren, die für eine klare Beschreibung vieler Aspekte speziell von Kommunikationssystemen sehr behilflich bzw. sogar notwendig sind.
■ gibt es in jedem "n-Punkt-Kommunikationsvorgang", n >= 2, zwischen zwei beliebigen seiner Endsysteme, z.B. A0 und Z0, eine abstrakte "**OSI-Verbindung**" - die sich auch auf Kommunikations-Anwendungssysteme in diesen beiden Endsystemen erstreckt, wie unten erläutert wird. Jede OSI-Verbindung ist gemäß OSI-RM fundamental untergliedert in 7 "übereinander liegende" abstrakte "**Li-Verbindungen**" (1 <= i <= 7), mittels denen dieser TKV zwischen diesen beiden Endsystemen A0 und Z0 erfolgt (wobei "L" für "layer" steht).

Das OSI-RM definiert damit - auf Grund seiner "7-Schichten" stets prinzipiell gleicher "Abstraktions-Semantik" seiner Li-Verbindungen in jeder OSI-Verbindung - die "**OSI-Kommunikations-Architektur**", die ihrerseits auf dieser "7-Schichten-Struktur" der grundsätzlichen Abstraktions-Semantik aller OSI-Verbindungen beruht. Diese grundsätzlichen 7 Abstraktions-Schichten seiner Kommunikations-Architektur nennt das OSI-RM - ganz unabhängig von einzelnen OSI-Verbindungen - naheliegenderweise jeweils "Li", 1 <= i <= 7.

In einer einzelnen OSI-Verbindung kann es für jedes "i" mehrere Li-Verbindungen geben. Jede solche Li-Verbindung muss zu ihrer Verwirklichung mindestens eine Lj-Verbindung der gleichen OSI-Verbindung benutzen, wobei immer j < i ist - abgesehen von
o einer L7-Verbindung (d.h. i = 7), die dazu eine andere L7-Verbindung benutzen kann, und
o einer L1-Verbindung, die dazu i.d.R. ein "physikalisches Medium" benutzt,
wobei eine Lk-Verbindung (1 <= k <= 7) von mehreren OSI-Verbindungen benutzt werden kann oder in einer OSI-Verbindung von mehreren Lk+i-Verbindungen (1 <= i <= 7-k).

Eine L7-Verbindung einer OSI-Verbindung wird oft als "**Kommunikationsverbindung**" bezeichnet, da in ihr von alleiniger Bedeutung ist die "**Kommunikation**" im Sinne des dieser OSI-Verbindung zugrunde liegenden spezifischen TK-Vorgangs bzw. des ihn unterstützenden "**Kommunikations-Anwendungssystems**" (letzteres angesiedelt in mindestens den beiden Endsystemen der OSI-Verbindung). D.h.: Eine L7-Verbindung abstrahiert völlig von den Modalitäten der in dieser Kommunikation - eines Kommunikations-Anwendungssystems, das ggf. menschliche TLNs in ihm treiben - benutzten Informationsübertragung (= L1- bis L4-Funktionalität), Informationsuntergliederung (= L5-Funktionalität) und Informationspräsentation (= L6-Funktionalität): Eine L7-Verbindung kennt nur die "**Interaktionen**" in dieser "**Kommunikations-Anwendungs**"-Kommunikation.

Diese OSI-Verbindung "**besteht**" zwischen A0 und Z0, sobald einer der TKV-TLNs in einem ihrer beiden (TKV-) Endsysteme A0 und Z0 diesen TKV begonnen hat, sobald also dieser TKV besteht - d.h.: beide (OCO und ihr TKV0) können zu diesem Zeitpunkt noch "**potentiell**" sein (siehe oben). Ab dann besteht nämlich zwischen A0 und Z0 die L7-Verbindung dieser A0-OC0-Z0 für diesen TKVO. Sie bleibt solange bestehen, bis diese beiden TKV-TLNs diesen TKV als beendet ansehen (was im OSI-RM als Beendigung dieser L7-Verbindung und OSI-Verbindung zu verstehen wäre). Der TKV bleibt auch danach bestehen, als "retrospektiver" TKV (siehe oben), ist also gegenüber seiner Modellierung per OSI-RM sozusagen originär.

In anderen Worten: Eine OSI-Verbindung (eines TKVs) "**besteht**"
o örtlich nicht nur zwischen den beiden (TKV-) Endsystemen A0 und Z0, - genauer: zwischen diesen beiden Endsystemen A0 und Z0 besteht die L3-Verbindung dieser OSI-Verbindung - sondern mittels ihrer L7-Verbindung auch zwischen den Kommunikations-Anwendungssystemen und sogar den TKV-TLNs in diesen Endsystemen A0 und Z0, und
o zeitlich sobald dieser TKV in einem dessen TLNs begonnen hat - insbesondere besteht ab diesem Zeitpunkt die L7-Verbindung dieser OSI-Verbindung zwischen den TLNs dieses TKVs - und bleibt solange bestehen, bis diese beiden TLNs diesen TKV als beendet ansehen.

Demnach ist diese OSI-Verbindung existent spätestens ab dem Zeitpunkt, ab dem in einem Endgerät des Endsystems des sie/ihn kreierenden (TKV-) TLNs in A0 oder Z0 irgendeine Maßnahme für sie/ihn erfolgt. Gemäß OSI-RM und im Sinne dieser Patentanmeldung ist sie zweifelsfrei existent bereits ab dem Zeitpunkt, zu dem in einem TLN des ihr zugrundeliegenden TKVs dieser in Angriff genommen wurde, und sei es auch nur prophylaktisch - z.B. durch seine explizite oder implizite Selbstvergewisserung der Erreichbarkeit einer Notrufnummer (etwa 110 oder 112) oder seiner Erreichbarkeit für ihn Anrufende.

Irgendeine Li-Verbindungen (1 <= i <= 7) dieser OSI-Verbindung braucht zu diesem Zeitpunkt aber noch nicht (abstrakt) realisiert oder realisierbar zu sein. Das Bestehen einer Li-Verbindung impliziert also nicht deren (abstrakte) Realisierung oder Realisierbarkeit. Und allgemeiner: Mit einer OSI-Verbindung bestehen auch ihre mindestens 7 Li-Verbindungen, von denen jedoch für kein j, 1 <= j <= 7, eine Lj-Verbindung - und ihre Zusammenarbeit mit den anderen Li-Verbindungen dieser OSI-Verbindung - abstrakt realisiert zu sein braucht (materielle Realisierungen/Implementierungen betrachtet das OSI-RM ohnehin nicht). Eine (abstrakte) Realisierung einer Li-Verbindung braucht es nur während ihrer aktuellen (abstrakten) Benutzung zu geben.

Dies impliziert, dass die OSI-Verbindung zwischen den beiden Endsystemen A0 und Z0 für diesen TKV bestehen bleibt, auch wenn insbesondere mindestens die mindestens eine L3-Verbindung für die Übertragung von L3-Teilnehmer-Daten zwischen A0 und Z0 in dieser OSI-Verbindung (abstrakt und/oder materiell) nicht realisiert ist - wie es in HOs oft vorkommt. Dass die L7-Verbindung einer OSi-verbindung in einem HO-Fall bestehen bleibt (zumindest ihre abstrakte, ggf. auch ihre materielle Realisierung,), kann mittels des o.g. "**HOCIS-Verfahrens**" sichergestellt werden (siehe Abschnitt **A.** und unten zu "Cl-Korrelation").
■ enthalten abstrakte "**Endsysteme**" neben ihren abstrakten menschlichen Benutzern - und/oder deren nicht-menschlichen Benutzern (= Benutzer-Automaten) und/oder deren o.g. Stellvertretern/Teilfunktionalitäten, alle als TKV-TLNs zu verstehen - abstrakte "Endgeräte", deren Gesamtheit in einem Endsystem nachfolgend gelegentlich ebenfalls als "Endgerät" bezeichnet wird, d.h. nicht-menschliche Funktionsgruppen, wie etwa die von LANs, WLANs, Großrechnern, Datenbanken, PBXes, RASes, Firewalls, Switches aller Art, aber auch die von Netz-Zugängen, IADs, E/A-Geräten. Nicht-menschliche (abstrakte oder materielle Implementierungen von) Funktionsgruppen in Endsystemen werden nachfolgend häufig als "**Moduln**" bezeichnet.
■ können abstrakte einzelne "**Endgeräte**" eines Endsystems separiert voneinander betrachtet werden, insbesondere
   o ein "Teilnehmer-terminales Endgerät" mit seiner elektronischen/physischen/akustischen /optischen/"logischen"/.... Benutzeroberfläche (in dieser Schrift häufig mobil, z.B. in einem Mobiltelefon),
   o ein "nicht-terminales Endgerät" mit seinem Netz-spezifischen "Terminal Adapter" (TA) für den "Netz-Abschluss" (NT = "Network Terminator") dieses Netzes, wobei
   o Teilnehmer-terminale und nicht-terminale Endgeräte eines Endsystems über physikalische/kommunikationstechnische Schnittstellen und/oder weitere Endgeräte miteinander zusammenarbeiten, von denen i.d.R. nur einige standardisiert sind, und
   o ein nicht-terminales Endgerät (und sogar dessen TA und dessen NT) insbesondere in ein mobiles terminales Endgerät (z.B. ein Mobiltelefon) integriert sein kann - sodass ersteres dann ebenfalls mobil ist.

   Zu einer solchen **Untergliederung von OSI-RM-konformen Endsystemen** in abstrakte Menschen und abstrakte Geräte wird angemerkt, dass das OSI-RM auf den ersten Blick eine Endsysteme-Untergliederung vermeidet, es sie aber letztendlich implizit aber ganz klar doch vornimmt. Ursache hierfür ist die gedankliche Notwendigkeit der Untergliederung von Kommunikations-Anwendungen, die i.d.R. auf der L7 in den Endsystemen angesiedelt sind, um sie in ihrem Wesen zu verstehen. Diese Notwendigkeit führte in den Festlegungen zur L7 (im einschlägigen internationalen Standard **ISO/IEC 7498** aus 1994 und der identischen **ITU-T Recommen-dation X.200**, u.A. Seite 32/33, und ihr entsprechender internationaler Standards, wie der **ISO/ IEC 9545** aus 1994 und der identischen **ITU-T Recommendation X.207**) zur Definition der funk-tionalen Struktur von OSI-RM-konformen abstrakten Kommunikations-Anwendungen, die logisch zwingenderweise die ihr entsprechende funktionale Untergliederung der sie beherbergenden Endsysteme impliziert, jedenfalls im Bereich der von ihnen beherbergten solchen Anwendungen. Die o.g. Untergliederung von OSI-Endsystemen in dieser Patentanmeldung ist eine spezielle und besonders einfache solche OSI-RM-konforme funktionale Untergliederung (mit der entsprechend vereinfachten und oben/nachfolgend eingeführten Terminologie zu dieser Untergliederung) von OSI-Endsystemen in Menschen und Endgeräte verschiedener Art darin.
■ sind abstrakte "**Server**" alias "**Server-Endsysteme**" alias "**Endsysteme-ohne-menschliche-TK-Vorgangs-Teilnehmer**" Funktionsgruppen in oder an einem Netz - unter der Verwaltung dessen Netzbetreiber(s) stehend oder nicht - die in dieser Schrift ebenfalls als Endsysteme/Endgeräte angesehen werden, letztere jedoch nicht als in terminal/nicht-terminal zu untergliedern sind.
■ sind abstrakte "**Systeme**" entweder Endsysteme/Endgeräte oder Netz-integrierte Computer.
■ hat mindestens eines dieser nicht-terminalen Endgeräte eines Endsystems und damit dieses "**Zugang**" zu mehr als einem Netz (bzw. einem Netz-Zugangspunkt eines Netzes bzw. einem Netz-Leistungsmerkmal an einem Netz-Zugangspunkt eines Netzes) - damit es ein HO durchführen kann, siehe unten - und zwar über einen jeweiligen "**Zugangspunkt**" eines Netzes. Da diese beiden Termini oft missverstanden werden, werden deren beider (dem maßgeblichen Fachmann bekannten) Sinngehalte hier zunächst geklärt (jedenfalls in für diese Patentanmeldung ausreichendem Umfang):
   Diese fachmännische "Zugangs"-Definition (in einfachen Worten) lautet: Ein Endsystem/Endgerät hat zu einem Zeitpunkt funktional "Zugang zu seinem Netz", wenn es zu diesem Zeitpunkt auf den OSI-Schichten L1-L3 seiner Verbindung zu einem funktionalen Zugangspunkt dieses Netzes in dem Sinne kommunizieren kann, dass es insbesondere mit allen Endsystemen/Endgeräten dieses Netzes, die zu diesem Zeitpunkt ebenfalls funktional Zugang zu ihm haben, Datenübertragung betreiben kann. Daraus folgt, dass ein Endsystem/Endgerät eines Netzes nicht permanent Zugang zu diesem zu haben braucht - wie es bei Endsystemen/Endgeräten von Mobilnetzen bekanntlich oft der Fall ist.
   Ein "Zugangspunkt" zu diesem Netz ist dabei eine Stelle des Übergangs der juristischen/geschäftlichen/technischen Verantwortlichkeit - für die Funktionsfähigkeit dieser drei Schichten auf den Datenübertragungsabschnitten (DÜAs) dieser Verbindung - vom Betreiber dieses Netzes an den Verantwortlichen für dieses Endsystem/Endgerät und seine DÜAs. Das Netz-seitige abstrakte Abschlussgerät dieser DÜAs am Zugangspunkt heißt "Netzabschluss" ("network terminator", NT), das Benutzer-seitige abstrakte Abschlussgerät dieses DÜAs am Zugangspunkt heißt "Terminaladapter". TA. In einer materiellen Implementierung eines Netzzugangspunktes können diese beiden begrifflichen Funktions-Einheiten, NT und TA, weitestgehend integriert sein - wie es bei Mobiltelefonen i.d.R. der Fall ist. (Speziell zu Mobiltelefonen sei angemerkt: Wenn diese Fähigkeit eines Mobilnetz-Telefons zum "direkten Mobilnetze-HO" sich auf ein GSM/CDMA/Satelliten-Netz einerseits und andererseits ein WLAN bezieht, wird es derzeit oft "FMC-Telefon" genannt (FMC = Fixed Mobile Conversion): Es unterstützt dann nämlich in einem Telefonanruf die Benutzung sowohl der heute umgangssprachlich als Festnetztechnik bezeichneten WLAN/VoIP-Technik als auch der als Mobilnetztechnik bezeichneten GSM/CDMA/Satelliten-Technik).
   Nach dieser Klärung der Begriffe Netz-"Zugang" und Netz-"Zugangspunkt" hinsichtlich deren alltäglichen rechtlichen Verständnisses für den maßgeblichen Fachmann - er weiß auch, dass diese Termini mit anderen Begriffen belegt sein können, die dann jedoch der expliziten Benennung ihres jeweiligen "Referenzmodells" bedürfen (siehe: J. Schiller, Abschnitt **A.**) - ist klar, dass ein in ein HO direkt involvierbares mobiles Endsystem/Endgerät, insbesondere ein Mobiltelefon, i.d.R. ein terminales und mindestens drei nicht-terminale Endgeräte enthält:
   o Sein terminales Endgerät dient definitionsgemäß primär der Realisierung der funktionalen akustisch/optisch/mechanischen Benutzeroberfläche eines Kommunikationsvorgangs,
   o seine drei nicht-terminalen Endgeräte sind i.d.R. erforderlich, damit es mit den zwei verschiedenen Netzen/Zugangspunkten/Leistungsmerkmalen in einem HO zusammenarbeiten kann: Sie bestehen in einem funktionalen "Switch" zur funktionalen Datenvermittlung zwischen seinem terminalen Endgerät einerseits und andererseits je einem funktionalen TA/NT zu/für dem/das jeweilige/n Mobil-Netz.

   Diese Klarstellung des Begriffs Zugangspunkt sollte schließlich in dieser Patentanmeldung eine Begriffsverwirrung eliminieren, die durch den Begriff "Wireless Access Point (WAP)" neuerer technischer Publikationen zur Internet-Mobilitäts-Technik in zweifacher Hinsicht entstanden ist:
   o Zum einen wird dieser Begriff "Wireless Access Point (WAP)" irreführenderweise als Synonym zum "Integrated Access Device (IAD)" benutzt, also als Synonym zu einem Gerät. Ein (abstraktes oder materielles) Gerät ist aber begrifflich etwas definitiv anderes als eine Menge von rechtsrelevanten Verantwortlichkeits-Übergangsstellen auf den Li's einer OSI-Verbindung, also ein "Zugangspunkt" dieser Patentanmeldung.
   o Zum anderen steht das Akronym "WAP" bereits seit Jahren für etwas ohnehin ganz anderes im Bereich der Drahtlos-Technik, nämlich für "Wireless Application Protocol" - was mit keinem "access point"-Begriff etwas zu tun hat, weil Anwendungen auf der L7 angesiedelt sind, während Netz-Zugangspunkte der verschiedenen möglichen Sinngehalte i.d.R. auf den Schichten L1-L3 (und dem darunter liegenden physikalischen Medium) angesiedelt sind.
■ heißt ein "**HO**" alias "**HO-Vorgang**" eines Endsystems und dessen TKVs (und deren beider OC) - in sinngemäßer Analogie zu obigem TKV (Details siehe dort) -
   o "**potentiell**", wenn für es/ihn noch keine seiner Wechsel-Maßnahmen in einem Endgerät durchgeführt wurde, aber mindestens eine andere Maßnahme dafür darin (aus hier irrelevanten Gründen und hier irrelevante Weise) un d/oder bereits in einem Endsystem angesprochen wurde, und
   o "**aktuell**", wenn dafür eine solche Wechsel-Maßnahme bereits in einem Endgerät erfolgte, wobei dieses/r Endsystem/TKV währenddessen von diesem HO "**betroffen**" heißt und "Wechsel" für eine Veränderung steht bei einem von diesem Endsystem (und dessen TKV und deren beider OC) benutzten Netz und/oder Netz-Zugangspunkt und/oder Netzdienst-Merkmal während des HOs. Dabei wird ein potentielles HO aktuell, sobald für ihn in mindestens einem seiner Endgeräte mindestens eine derartige Veränderungs-Maßnahme "gestartet"/"begonnen" wird, und ein aktuelles HO "**läuft**" danach bis die Durchführung aller derartiger Veränderungs-Maßnahmen - erfolgreich oder erfolglos - abgeschlossen sind.
■ die beiden Endsysteme einer OSI-Connection eines TKVs zu zwei verschiedenen Netzen gehören können - wie es die **Abbildung 1** zeigt - sodass ein abstraktes "**OSI-Transit-System**" diese OSI-Verbindung zwischen diesen beiden Netzen "**relayt**" (= "weiterschaltet"/"werknüpft"...). Die vorliegende Patentanmeldung sieht dieses abstrakte "**Relay-System**" oft als End-System beider Netze und jedenfalls als "**Transit-System**" darüber relayter OSI-Verbindungen an. Dieses abstrakte "**Relayen**" erfolgt erfindungsgemäß für mindestens eine der abstrakten Li-Verbindungen, 1 <= i <= 7, einer OSI-Verbindung - im Falle mehrerer in diesem Relay-System von dieser OSI-Verbindung relayter Li-Verbindungen erfolgt deren Relayen einzeln und/oder gemeinschaftlich.
   Zu beachten ist hier, dass diese Relaying-Funktionalität eines Transit-Systems sich auch auf mindestens eine potentielle OSI-Connection erstrecken kann, also insbesondere auf das Herstellen einer (abstrakten und/oder materiellen) Implementierung mindestens einer deren mindestens 7 Li-Verbindungen.
   Ein Beispiel für ein solches Relay-System ist das allgemein bekannte VoIP-Gateway zwischen Internet und PSTN/ISDN/UMTS, über das ein Telefonanruf/-gespräch zwischen A0 und Z0 (jedenfalls teilweise) relayt wird, wenn A0 Endsystem am Internet und Z0 Endsystem am PSTN/ISDN/UMTS ist. Der Fachmann weiß auch, dass Li-Verbindungen einer OSI-Verbindung zwischen A0 und Z0 - zeitweise oder permanent - über mehrere Relay-Systeme verlaufen können: In diesem Beispiel zusätzlich zum VoIP-Gateway etwa über einen SIP-Server.
   Ein anderes Beispiel für ein solches Relay-System ist ein WLAN-IAD am Internet. Dieses kommuniziert auf der L1-L3 mit den WLAN-Endsystemen mittels der Protokolle der "WLAN-Luftschnittstelle" dieses IADs, während es für die Kommunikation mit den Internet-Endsystemen auf der L1-L3 die entsprechenden Internet- Protokolle benutzt - was in den entsprechenden Li-Verbindungen einer über ein solches IAD relayten OSI-Verbindung erhebliche "Protokoll- und Datenkonvertierungen" erfordern kann. Für deren L4-L7-Verbindungen kann das IAD die Protokolle und Daten beim Relayen verändern oder auch nicht.
   Der maßgebliche Fachmann kennt dies alles und weiß hierzu insbesondere, dass Li-Verbindungen einen "**Tunnel**" haben können, um "IP-Adressen-End-to-End-Signifikanz" herzustellen (trotz Mobilität mindestens eines der Endsysteme ihrer OSI-Verbindung, siehe Abschnitt **A.**). Der Verzicht auf diese IP-Adressen-End-to-End-Signifikanz eröffnet die Möglichkeit, unterschiedlichste Funktionalitäten in einem Relay ansiedeln zu können - wie z.B. das "Zusammen-Mischen mehrerer TKVs mit unterschiedlichen TLNs in dem Relay, z.B. das für die vorliegende Erfindung wichtige ,geeignete Überlagern der Audio-Kanäle dieser TKVs' (mehr dazu unten)" für den Benutzer eines Endsystems, d.h. TLN dieser TKVs - also bei Verzicht auf eine solche "Misch-Fähigkeit" in dessen Endsystem (u.A. weil selbst heutige FMC-Telefone oder PDAs o.Ä. nicht über eine derartige Funktionalität verfügen). Deshalb ist zu unterscheiden, ob das (etwaige) Relay einer OSI-Verbindung mit einem solchen Tunnel befasst ist oder nicht, sodass auch zu unterscheiden ist zwischen einem in seiner Funktionalität beschränkten "**Tunnelling-Relay**" und einem "**Tunnel-freien Relay**" dafür. Ein System kann für eine oder mehrere OSI-Verbindungen mehrere Relays unterschiedlicher Art enthalten/einsetzen und dann diese beiden Relaying-Techniken ggf. nebenläufig praktizieren. Dementsprechend wird zwischen zwei Arten von MHOs unterschieden, "**Tunnel-freien MHOs**" und "**Tunneling MHOs**", je nachdem ob ein MHO dafür ein Tunnel-freies Relay oder gar kein Relay bzw. ein Tunnelling-Relay benötigt.
   Implizit ist damit bereits angesprochen, dass die vorliegende Erfindung grundsätzlich - genau wie im HOCIS-Verfahren beschrieben - in einen "**Primären TKV (PTKV)**" eines Endsystems A mit Endsystem Z mindestens einen "**Sekundären TKV (STKV)**" für Endsystem A mit i.d.R. mindestens einem anderen System Y "einmischt". Einfachste Beispiele wären ein IP-TV-TKV von A mit dem TV-Server Z als PTKV und während dessen ein bei A ankommender VoIP-Anruf von Y als STKV. Will man das Netsurfing-Verfahren mit heutigen FMC-Telefonen praktizieren, d.h. ein MHO z.B. in ein anderes WLAN in dieser Situation durchführen, so muss dieses Mischen in das o.g. und in diesem Sinne "tunnelfreie Relay" für den PTKV ausgelagert sein - was die Nutzung der durchaus Vereinfachungen bietenden Tunneling-Technik durch dazu fähige Systeme im Netsurfing-Verfahren nicht ausschließt. Mehr zum Mischen mindestens einen PTKVs mit mindestens einem STKV folgt nach der untenstehenden Einführung von "MHO-Maßnahmen".
   Man beachte schließlich: Ein MHOM eines IADs o.Ä. kann statt einen Intemet-Zugang einen anderen Netz-Zugang nutzen, z.B. einen PSTN-Zugang oder einen Zugang zu einem anderen WLAN über eines dessen IADs. Die Tunnelling-Technik ist grundsätzlich immer einsetzbar, falls die über ein Netz ausgetauschten Informationen paketiert sind - unabhängig insbesondere von der Vermittlungstechnik dieses Netzes.
■ eine "**Managed-HO-Spezifikation, MHOS**" stets
   o genau einem realen oder virtuellen (siehe unten) homelAD oder homeServer oder homeSystem - für das/den das einheitliche Akronym "**homeMIAD**" steht - zugeordnet ist, sie also nicht darin enthalten zu sein braucht (wobei zu einem homeMIAD eine Menge von homeEndsystemen gehört, die nur der Manager des homeMIADs als solche definieren kann, sodass dieses Akronym an den Sicherheits-/Privacy-Aspekt der MHOS erinnert),
   o nur dessen Manager die MHOS definieren und seinem homeMIAD zuordnen kann,
   o mindestens zwei Arten von "**Managed-HO-Maßnahmen, MHO-Ma**" kennt, die mittels eines von ihr kontrollierten homeEndsystems in dessen MHO ausgeführt werden, und zwar von einem die MHOS enthaltenden homeMIAD selbst oder unter dessen Kontrolle von einem anderen System, von denen mindestens eine Art mindestens eine Benutzer-Kommunikation verursacht, und
   o das Zusammenwirken ihrer MHO-Ma-Ausführungen in einer MHO-Ausführung spezifiziert,
   wobei nachfolgend der Einfachheit halber gelegentlich homeIAD gesagt wird (statt "homeMIAD").
   Im Sinne der obigen PTKV-/STKV-Terminologie/Begrifflichkeit des HOCIS-Verfahrens ist jede MHO-Ma-Ausführung, die mindestens eine Benutzerkommunikation verursacht, ein STKV.
   In einer Netsurfing-Verfahrens-Anwendung brauchen nicht alle HOs eines ihr zugrundeliegenden TKVs MHOs zu sein, aber die MHOS bewirkt in diesem TKV mindestens ein MHO. Dieses ist stets durch mindestens eine MHOS gesteuert - d.h. an dessen Steuerung können mehrere möglicherweise unterschiedlich definierte MHOS beteiligt sein. Umgekehrt kann ein homeMIAD mehrere MHOS enthalten.
   Es ist Sache einer MHOS eines homeMIADs festzulegen, welches von dessen homeEndsystemen sie in welchen MHO hinsichtlich welcher dieser Maßnahmen steuert, d.h. welche dieser Maßnahmen für dieses Endsystem in diesem MHO wie in Zusammenwirken mit anderen Maßnahmen dafür erbracht werden. Die **Abbildungen 6-8** im Abschnitt **D.** diskutieren verteilte Implementierungen einer MHOS (und des bisherigen MHOMs) und deren Ausführbarkeits-Aspekte.
   Zu den Arten von MHO-Ma in einer MHOS gehört in dieser Patentanmeldung:
   o Eine optionale Art von MHO-Ma, die "**MHO-Kontrollmaßnahmen, KoMa**", steuert und vollzieht die Zulässigkeits-Überwachung der Benutzung eines Netx durch ein homeEndsystem in einem MHO und ggf. die Herstellung bzw. das geeignete Management einer/s Tunnel-freien Netsurfing-Connection/Relays (siehe unten und oben) für A0 und dieses Netx, also für ein Tunnel-freies MHO.
   o Mit einer anderen optionalen Art von MHO-Ma, mit den "**MHO-HOCIS-Maßnahmen, HOCISMa**" (HOCIS = "HO Convenience Information Support", siehe Abschnitt **B.**), werden für die Benutzer der homeEndsysteme die unterschiedlichsten Unterstützungsmaßnahmen hinsichtlich deren potentieller und aktueller HOs gesteuert und erbracht.
   o Für sog. "**GeMa-MHOs**", die ggf. Tunnel-frei erfolgen können, ist mindestens eine "**MHO-Geschäftsmaßnahmen, GeMa**"-Art von MHO-Ma unerlässlich, während sie für MHOs optional ist. In beiden Fällen kann ein homeMIAD mit der Ausführungs-Steuerung einer GeMa für seinen Betreiber - und ggf. für die mit ihm geschäftlich kooperierenden Betreiber von sharedIADs - während eines MHOs oder GeMa-MHOs die unterschiedlichsten geschäftlichen Maßnahmen verwirklichen, z.B. werblicher Art. Dabei verwirklicht die Ausführung einer GeMa stets eine Kommunikation mit dem TKV-TLN, dessen homeEndsystem von einem HO gerade betroffen ist, wobei dieser diese Kommunikation zur Kenntnis nehmen (d.h. irgendwie bestätigen) muss oder nicht.
   o Weitere Arten von optionalen MHO-Ma sind für eine bzw. in einer MHOS beliebig definierbar bzw. spezifizierbar, z.B. um unterschiedlichste Einblendungen eines IP-TV-TKVs in einen VoIP-TKV (oder umgekehrt) zu ermöglichen und - von wem auch immer - steuern zu lassen.
   o Aus Vereinfachungsgründen wird auch das HO selbst - also der für ein MHO grundlegende Vorgang - als optionale "**MHO-HO-Maßnahme, HOMa**" angesehen.
   Eine einzelne, spezifische solche MHO-Maßnahme wird nachfolgend i.d.R. durch eine abschließende "0" gekennzeichnet (z.B. wie in "GeMa0" oder "HOMa0") und aus Rückbestätigungsgründen mit dem Präfix "MHO-" versehen.
   Jedes GeMa-MHO ist "**Cl-korreliert**" (CI = "Convenience Information") in folgendem Sinne: Dieses GeMa-MHO-Merkmal kennzeichnet den Sachverhalt, dass während einer GeMa-MHO-Ausführung die Ausführung seiner zugehörigen mindestens einen MHO-GeMa im Zusammenhang erfolgt - implizitem oder explizitem - mit der Ausführung einer optionalen MHO-Ma. Eine GeMa in einem tunnelfreien MHO braucht nicht CI-korreliert zu sein, kann es aber.
   Dieses intuitiv vielleicht unmittelbar verständlich erscheinende CI-Korrelations-Merkmal einer MHO-GeMa-Ausführung mit mindestens einer optionalen MHO-Ma-Ausführung in einem GeMa-MHO, also z.B. "die einer GeMa mit der einer HOMa und/oder KoMa und/oder HOCISMa ...", wird sicherheitshalber nachfolgend genauer beschrieben.
   Zu unterscheiden ist vor allem zwischen einer expliziten und einer impliziten solchen CI-Korrelation, wobei diese beiden CI-Korrelationsarten völlig unabhängig voneinander sind. Eine spezifische MHO-GeMa0 (und damit das sie benutzende Netsurfing-Verfahren) wird als mit mindestens einer dieser optionalen MHO-Ma0 - beide im gleichen Netsurfing-Verfahren -
   o "**explizit korreliert**" bezeichnet, - unabhängig von der unten spezifizierten GeMa0-Ausführungs-Reihenfolge hinsichtlich mindestens einer optionalen spezifischen Ma0-Ausführungs-Reihenfolge - wenn die von der GeMa0 oder von dieser Ma0 (während ihrer Ausführungen) an mindestens einen TLN kommunizierte mindestens eine Nachricht einen solchen Zusammenhang jedweder Art beschreibt oder sie sich darauf bezieht, und
   o "**implizit korreliert**" bezeichnet, wenn folgendes gilt: Es gibt zu diesem Netsurfing-Verfahren einen TKV derart, dass für einen dessen TLNs und ein (potentielles und/oder aktuelles) HO dessen Endsystems
      es je mindestens eine Ausführung dieser Ma0 und dieser GeMa0 gibt,
      und der Beginn-Zeitpunkt von dieser GeMa0-Ausführung und/oder von deren Anzeige beim TLN folgendermaßen liegt:
         ➢ später als 30 Sekunden vor dem Beginn-Zeitpunkt der Ma0-Ausführung und
         ➢ nicht später als 30 Sekunden nach dem Terminierungs-Zeitpunkt letzterer,
      wobei irrelevant ist, ob/wann/wie der TLN von dieser Ma0-Ausführung erfährt.

   Mittels einer derartiger Korrelationen einer GeMa, die der homeMIAD-Betreiber - genauer: dessen MHOS - für mindestens ein von ihm/ihr gemanagtes Endsystem (und dessen Benutzer) vornimmt, wird die zugehörige GeMa-Kommunikation "so gut es geht" im TKV (der der Netsurfing-Verfahrens-Anwendung etwa in einem VoIP-Anruf zugrunde liegt) untergebracht. Und diese möglichst günstige Unterbringung solcher (von den TLNs ja ursprünglich nicht erbetenen und daher von ihnen möglicherweise als Belästigung empfundenen) Geschäfts-Kommunikation erfolgt im Zuge von HO-Vorgängen. Hier kann sie nämlich so konzipiert werden, dass sie nicht nur den/die TKV-TLN/s durch diese Geschäfts-Kommunikationen "so wenig stört wie nur möglich", sondern er/sie sie in diesem Moment sogar als behilflich empfindet/n - was die Kunden-Akzeptanz/-Wirksamkeit solcher Geschäfts-Kommunikationen entscheidend verbessert. Und derartige "günstige Momente" anlässlich möglichst aller HOs herbeizuführen ist die Aufgabe dafür geeignet konzipierter HOCIS-Aktivitäten. Auf Grund seines CI-Korrelations-Merkmals - das seinerseits alle optionalen MHO-Ma als Korrelations-Grundlage akzeptiert - ermöglicht das Netsurfing-Verfahren also auf einfache Weise, das vermeintliche Störungs-Potential eines HOs in einem VoIP-Anruf zu transformieren in das eben skizzierte Komfort- und Geschäfts-Potential dieses HOs. Diese CI-Korrelation von GeMa-MHOs darf also als Convenience-kreierend angesehen werden - daher ihr Name - auch wenn sie zu ihrer optimalen "Produktivitäts-Entfaltung" in einem Netsurfing-Verfahren i.d.R. wohl eine HOCISMa-Korrelation ist.
   Diese Erörterung zu GeMa-MHOs abschließend sei angemerkt, dass von den Verfassern dieser Patentanmeldung erwartet wird, dass in Zukunft die meisten MHOs des Netsurfings - also auch in den Fällen, in denen auf eine GeMa oder deren CI-Korrelation verzichtbar ist (siehe Anspruch 2) - die eben diskutierte geschäftliche Nutzung von HOs für GeMa praktizieren dürften, weil deren Kosten/Nutzen-Salden für alle Beteiligte dafür sprechen.
   Letzteres etwas genauer: Diese MHOS-/GeMa-MHO-Technik realisiert die beiden Grundlagen des erfindungsgemäßen Wsurfing-Verfahrens:
   o Zum einen die eher wirtschaftliche Grundlage, firmeninterne homelADs zur Triebfeder neuartiger sinnvoller Wirtschaftstätigkeit ihrer Betreiber im Rahmen vor allem von VoIP-Anrufen zu machen, möglichst unter Beteiligung öffentlicher sharedIADs, und
   o zum anderen die eher gesellschaftliche Grundlage, komfortablere und leistungsstärkere Kommunikationstechnik in allen Ballungsgebieten kurzfristig und kostengünstiger jedermann für ihre zukünftigen Multimedia-Endsysteme zur Verfügung zu stellen (insbesondere zur Nutzung deren IP-TV-Fähigkeiten), als dies allein mittels heutiger Mobilnetz-Techniken (auf Grundlage von GSM, CDMA, UMTS, Wimax, ... und ihren Derivaten) möglich ist - wobei diese als "Rückfall-Technik" überall dort bedeutsam bleiben wird, wo die sharedWLAN-Technik nicht oder kostengünstig nicht verfügbar ist.

   Einige einfache Beispiele der und Anmerkungen zu dieser CI-korrelierenden MHOS-/Gema-MHO-Technik können dies illustrieren. Mittels einer
   o optionalen MHOS0/Funktion1, einem homeMIAD0 zugeordnet, entscheidet dieses vor oder zu Beginn eines HOs eines WiFi-Telefon A0 (das ein HomeEndsystem von homeMIAD0 ist), ob dieses mit seinem/r aktuellen TKV/OC0 zu einem anderen Telefon Z0 (der/die relayt ist über einen MHOM0), ein MHO zu einem IAD1 durchführen darf (= MHO-KoMa),
   o optionalen MHOS0/Funktion2, ebenfalls dem homeMIAD0 zugeordnet, informiert dieses vor oder zu Beginn des vorstehenden HOs die beiden TLNs dieses TKVs über die potentielle und/oder aktuelle HO-Durchführung (= MHO-HOCISMa),
   o für ein GeMa-MHO pflichtgemäßen MHOS0/Funktion3, die gleichermaßen diesem homeMIAD0 zugeordnet ist, praktiziert letzteres (bzw. dessen MHOS) eine Geschäftsmaßnahme, etwa die Kommunikation eines werblichen Hinweises an den Benutzer des in dieses HO involvierten homeMIAD0-homeEndsystems bzw. die beiden TLN dessen TKVs - wobei diese zusätzliche technische Kommunikation vor oder während oder nach dieser vorangehenden Entscheidung (was hier irrelevant ist) ein- oder mehrmals und irgendwann (was hier irrelevant ist) erfolgt (= MHO-GeMa).

   An diesem kleinen Beispiel wird deutlich, dass die Ausführung dieser MHO-GeMa am günstigsten CI-korreliert erfolgt mit der Ausführung der vorstehenden MHO-KoMa (wobei diese CI-Korrelation nicht erfordert, dass die Ausführung dieser MHO-KoMa einem der TKV-TLNs kommuniziert wäre), vor allem aber mit der Ausführung der vorstehenden MHO-HOCISMa - wobei die CI-Korrelation vor allem in VoIP-Anrufen nun i.d.R. davon Gebrauch macht, dass die Ausführung dieser MHO-HOCISMa i.d.R. ohnehin stets mit beiden TKV-TLNs kommuniziert. Dies bedeutet jedoch nicht, dass der Einsatz des Netsurfing-Verfahrens nur bei Einsatz auch des HOCIS-Verfahrens möglich wäre: Ersteres ist technisch gesehen absolut unabhängig von letzterem, und auch inhaltlich sind MHOs des Netsurfing-Verfahrens vorstellbar, in denen eine Cl-Korrelation einer MHO-GeMa mit einer MHO-HOCISMa wenig sinnvoll ist.
   Dabei:
   o können sowohl solche Entscheidungsfindungen (auf Grund solcher MHO-KoMa) des homeMIAD0 als auch dessen definitiv kommunikative HOCIS- und Geschäfts-Maßnahmen interaktiv konzipiert sein in dem Sinne, wie es etwa von einem IVR-System allgemein bekannt ist - interaktiv beispielsweise sowohl mit Endsystem-Benutzem an den vom homeMIAD0 unterstützten sharedIADs als auch mit dessen anderen Geschäftspartnern.
   o kann die MHOS mindestens einen Kommunikations-Status vorsehen, und dieser vom homeMIAD0 - z.B. mittels dessen MHO-Ma - erfasst/modifiziert/ausgewertet und etwa in der o.g. Entscheidung berücksichtigt werden, und dieser KS die unten beschriebene Auswirkung auf eine solche Entscheidung haben.
   o können diese MOHS-gesteuerten MHO-Ma des homeMIAD0 kontextsensitiv gestaltet werden (also etwa während eines/r potentiellem TKVs/OC anders konzipiert sein als während eines/r laufenden TK Vs/OC) und/oder multimedial (also etwa nach oder gleichzeitig mit einem Audiosignal an einen TLN diesem textuelle oder graphische Information auf sein Endsystem nebenläufig und ggf. ohne die VoIP-Audio-Information zu beeinträchtigen kopieren).
   o können in jeder abstrakten und/oder materiellen Implementierung jeder MHO-Ma sämtliche MHO-Ma-Arten auf das Engste miteinander verwoben sein derart, dass sie von einem von ihr betroffenen Endsystem-Benutzer nicht als solche einzelnen Arten identifizierbar sind, und
   o kann ein homeIAD-Betreiber mindestens für eine und/oder alle Entitäten seiner homeEndsysteme (z.B. die deren OCs und die dieser selbst) jeweils inhaltlich gleiche oder unterschiedliche MHOS festlegen und diese dementsprechend differenziert oder sehr einfach konzipieren. Letzteres heißt: In einer MHO-KoMa stets nur triviale Beschränkungen spezifizieren (wie etwa: "neues MHOM-Wirts-System = homeIAD" und "neues Endsystem = homeEndsystem"), und in einer MHO-GeMa stets nur triviale Benutzer-Kommunikationen vorschreiben (wie etwa
      ❖ "bei HO-Risiko für Endsystem Ax > ,1x-AudioKurzsignal' und ,aktuellesharedIAD-BetreiberID-blinkend' und ,Signalstärke-blinkend'"
      ❖ "bei HO-Beginn für Endsystem Ax > ,2x-AudioKurzsignal' und ,aktuellesharedIAD-BetreiberID-bye-Ansage'" und ,Signaltransfer-blinkend'"
      ❖ "bei HO-Ende für Endsystem Ax > ,3x-AudioKurzsignal' und ,neuesharedIAD-BetreiberID-hallo-Ansage'" und ,neue-Signalstärke-blinkend'"
      ❖ "bei HO-Fehlschlag für Endsystem Ax > ,7x-AudioKurzsignal' und ,3x-AudioLangsignal'").
      Während man die Kommunikation von AudioKurz-/-Langsignalen als HOCISMa werten kann, sind die sharedIAD-BetreiberID-Ansagen definitiv (rudimentäre) Werbe-Info-Kommunikationen. Derartige MHO-Ma können global für alle oder selektiv für einzelne homeEndsysteme in einer MHOS spezifiziert sein, und letztere kann auch fest konfiguriert vorgegeben sein (was hier aber alles irrelevant ist, da dies Fragen der Ausgestaltung und materiellen Implementierung der Erfindung sind).

   Der maßgebliche Fachmann weiß, dass die MHOS eines Betreibers eines virtuellen oder realen homeMIAD in einer materiellen Implementierung (= Ausführungsform) des Wsurfing-Verfahrens eine Spezifikation in diesem homeMIAD ist, die in dieses von dessen Betreiber teilweise oder gänzlich irgendwie eingegeben wird oder/und bereits darin enthalten ist und vom Betreiber nur konfiguriert wird und/oder fest darin vorgegeben ist, und die - zu dieser MHOS gehörigen - MHO-Ma dieses homeMIAD durch die Interpretation dieser MHOS durch diesen homeMIAD realisiert werden. Er weiß auch, dass irgendwelche speziellen MHO-GeMa und deren spezielle CI-Korrelationen nicht zum Wesen der Erfindung gehören, sondern nur die Tatsache, dass es beide in jeder (Anspruch-1-gemäßen) MHOS gibt, sodass jedenfalls jedes GeMa-MHO gekennzeichnet ist durch das sehr spezielle technische Merkmal einer "CI-Korrelationbeschränkten" Kommunikation zwischen dem Benutzer des "MHOten" Endsystems und dessen homeMIAD zur Realisierung einer solchen MHO-GeMa - aber auch andere MHOs diese Kennzeichnung aufweisen können.
■ dient das Attribut "**homeMIAD privat**" der MHOS lediglich zur Betonung der "**Privacy**" dieser vorstehend gekennzeichneten MHO-Management-Maßnahmen für und nur für den Betreiber dieses und nur dieses homeMIAD. Dabei sei angemerkt: Der abstrakte homeMIAD-Betreiber kann durch zwei verschiedene materielle Personen realisiert werden - ein abstrakter "Betreiber' kann für eine "materielle Betreiber-Person und/oder eine materielle Manager-Person" stehen.
   Diese Privacy schließt also aus, dass ein Zweiter - neben diesem homeMIAD-Betreiber als Erstem - dessen homeMIAD private MHOS erfährt oder setzt oder ändert ohne des Ersten Wissen und Zustimmung. Ist dieser Zweite insbesondere ein Betreiber und/oder Manager eines Netzes irgendeiner Art (das nicht das Netz dieses homeMIADs ist) oder Dienstes (der nicht der Dienst dieses homeMIADs ist), so sind ihm diese MHOSs unzugänglich und unverständlich. Diese Privacy bedeutet jedoch nicht, dass ein Zweiter nicht wüsste oder wissen darf, welche MHOSs ein homeMIAD-Betreiber diesem grundsätzlich überhaupt zuordnen kann. Auf die dazu letztendlich erforderliche und bekannte Verschlüsselung von TLN-Informationen wird hier nicht eingegangen.
■ gibt es zwei Arten von homeMIADs: Eine "**reale** und eine **virtuelle homeMIAD**"-Art, beide Arten ggf. sowohl in abstrakter als auch materieller Implementierung. Zu jedem homeMIAD - einem realen ebenso wie einem virtuellen - gibt es begrifflich genau einen "logischen" Manager und einen "physischen" Betreiber. Bei einem realen homeMIAD sind sein Manager und sein Betreiber identisch - was in beiden Implementierungen nicht gleich zu sein braucht.
■ legte schon der vorangehende Sprachgebrauch nahe, dass in dieser Schrift sowohl die Termini/Begriffe "**MHO**", "**MHO-Verfahren**" und "**MHO-Vorgang**" als auch "**MHO-PDU**" und "**PDU**" (PDU = protocol data unit) gelegentlich jeweils als Synonyme - die Terminologie also etwa vereinfachend im Sinn ihrer geringfügigen Vergröberung - gebraucht werden (obwohl dies im ersten Fall an sich unzulässig ist, da ein abstrakter "Vorgang" stets eine abstrakte Anwendung eines abstrakten "Verfahrens" ist, d.h. dessen abstrakte "Anwendungs-Instanziierung").
■ erfolgt schließlich nun noch die Klärung von einigen weiteren an die Gegebenheiten dieser Patentanmeldung angepassten Termini/Begriffe.
   o "**homeWLAN**" alias "**homeNet**": In dieser Schrift ist ein Endsystem A0 administrativ einem homeWLAN alias homeNet und dessen erfindungsgemäß mindestens einem realen oder virtuellen homeMIAD zugeordnet. A0 ist für dieses homeWLAN/homeNet/homeMIAD ein "homeEndsystem". Das einfachste Beispiel für ein erfindungsgemäßes homeMIAD/homeWLAN/homeNet kann mittels eines WiFi-IAD/WLAN und seinem homeEndsystem A0 (eine Einzelperson mit WiFi-Telefon) realisiert werden. Dieses WiFi-Telefon A0 kann dann mittels eines beliebigen shared WiFi-WLANs Wx alias Netx erfindungsgemäß Wsurfen/Netsurfen, falls A0 bei Wx/Netx nur "einchecken" kann (siehe unten) und das homeMIAD von A0 erfindungsgemäß eine/n MHOS/MHOM enthält (und diese/r mit dem IADx von Wx/Netx eine Wsurfing-Verbindung bereit ist zu betreiben).
      Dieser allgemein bekannte homeWLAN-/homeNet-Begriff ist in dieser Patentanmeldung erstens erweitert auf den hier benutzten WLAN-/Net-Begriff (siehe Abschnitt **B**.). Zweitens ist er erweitert auf mögliche "uneigentlich" zugehörige homeEndsysteme, z.B. Telefone wie ein o.g. A0 - wobei dieses uneigentliche "home"-Merkmal eines Endsystems zu irgend einem IAD/Server induziert sein kann durch einen KS (siehe unten), etwa seines eigenen oder den seiner OC oder den seines TKVs oder dessen anderer Endsysteme oder des ganzen homeWLANs oder dieses IADs/Servers oder .... Ein KS kann also bewirken, dass eine OC eines Endsystems oder TKVs von einem IAD/Server, z.B. mit dafür eigentlich zuständigem MHOM, relayt werden kann oder sogar muss, auch wenn dieses Endsystem gar kein eigentliches homeEndsystem dieses MHOMs/IADs/Servers (im o.g. Sinne) ist. In dieser Patentanmeldung gehören zu einem homeWLAN/homeNet/homeMIAD/MHOM sowohl dessen eigentliche als auch uneigentliche homeEndsysteme.
   o "**Einchecken**": Ein Endsystem A0, das das elektronische Signal z.B. eines WiFi-WLANs oder anderen Netzes empfängt, kann dieses i.d.R. erst zur Kommunikation - insbesondere über das Internet - benutzen, nachdem es sich bei mindesten einem/r dessen (möglicherweise mehreren) IADs oder Base Stations oder ... um die Nutzungsbefugnis dieses Netzes beworben hat. Wird sie ihm gewährt, so ist A0 bei diesem Netz eingecheckt. Die Prozeduren bzw. Protokolle zwischen A0 und diesem/r IAD/Basistation, nach denen dieses Bewerben um und Gewähren von bzw. auch das Andienen/Annehmen von Benutzungsrechten eines Netzes erfolgt, sind für diese Patentanmeldung irrelevant.
      Jedoch sei noch definiert: A0 gilt als "**erreichbar**" an einem Netx, wenn A0 bei diesem Netx eingecheckt oder eincheckbar ist. Ggf. reicht es aus, dass A0 dort "Wsurfingeingecheckt/eincheckbar" ist, wie im Abschnitt D. erläutert - wobei mögliche Modalitäten und Implementierungen einer solchen Eincheck-Beschränkung bzw. eingeschränkten Eincheckmöglichkeit in dieser Patentanmeldung irrelevant sind.
   o "**Netsurfing-Verbindung** (NSC)": Dies ist mindestens eine L3-Verbindung eines OCO-Segments der OC0 zwischen A0 und Z0, nämlich dem zwischen A0 und einem System S0 in/an einem WLANx/Netx, das verschieden ist von dem homeWLAN0/homeNet0 von A0.
   o "**Kommunikationsstatus KS**": Oben wurde bereits erläutert, dass ein/e TKV/OC einer spezifischen Kommunikations-Anwendung auf der Grundlage des Wsurfing-Verfahrens (etwa bei TKVs mit spezifischen Merkmalen, wie Notrufe oder kostenreduzierten Anrufen aller Art oder Kundendienst-Anrufe oder zu überwachende Anrufe oder Anrufe von Unmündigen oder Anrufen von bestimmten Fem-Netzen oder WLANs oder Orten oder Ereignissen aus oder zu bestimmten Zeiten oder...) durch Merkmale gekennzeichnet sein kann, die beim Wsurfing eines Endsystems A0 dazu führen, dass es bevorzugt behandelt wird - z.B. indem seine OC relayt werden kann oder sogar muss, von wem auch immer, falls er dazu nur technisch geeignet ist (wobei die kommerzielle oder rechtliche oder anderweitige Begründung für die Notwendigkeit/Sinnhaftigkeit dieser Bevorzugung in dieser Patentanmeldung nicht betrachtet wird, sondern nur die Tatsache, dass sie vorliegen kann oder nicht).
      Dieser KS kann aber auch eine benachteiligende oder anderweitige Relaying-Behandlung einer OC - durch welchen IAD/Server und wie auch immer, bis hin zu einer totalen Relaying-Verweigerung, d.h. Aberkennung eines home"-Merkmals für Entitäten - beinhalten.
      Der KS eines/r erfindungsgemäßen VerfahrensNorrichtung bzw. der Entitäten einer OCO (siehe unten) beeinträchtigt also derartige Merkmals-Mengen des Relayings von OCs.
   o "Entitäten einer OCO": Hier werden darunter sowohl die Li-Entitäten ihrer Li-Verbindungen verstanden, als auch die Li-Verbindungen selbst, das zu deren Realisierung benötigte mindestens eine Netz und ggf. dafür erforderliche weitere Mittel.

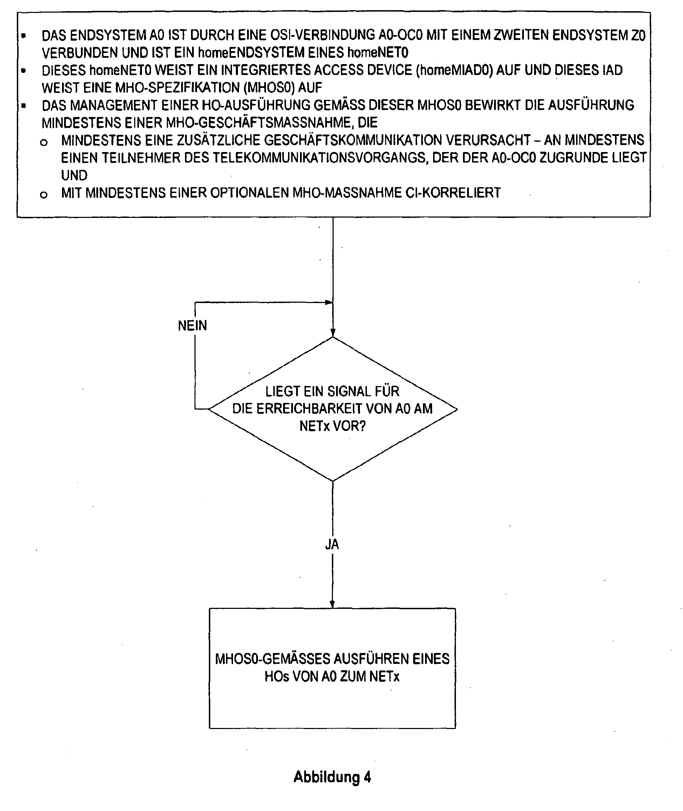

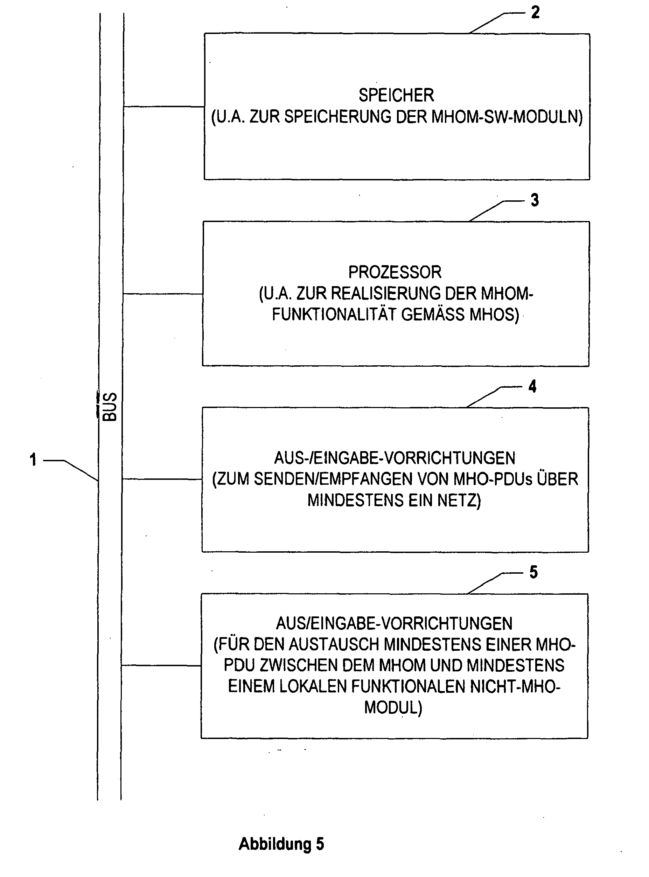

Das Ablaufdiagramm der **Abbildung 4** zeigt die Verfahrensschritte des Hauptanspruchs 1. **Abbildung 5** zeigt die HW -/SW-Komponenten der abstrakten Mittel einer erfindungsgemäßen Vorrichtung gemäß Anspruch 14-16. Am Bus (1) sind i.d.R. angeschlossen: der Speicher (2) zur Speicherung u.A. der MHOM-SW-Moduln, die die MHOS enthalten, der Prozessor (3) zur Realisierung u.A. dieser MHOM-Funktionalität gemäß MHOS, die Aus-/Eingabe-Vorrichtungen (4) für das MHO-PDU-Absenden/Empfangen über mindestens ein Netz, die Aus-/Eingabe-Vorrichtungen (5) für den Austausch mindestens einer MHO-PDU zwischen dem MHOM und mindestens einem lokalen funktionalen Nicht-MHO-Modul (ggf. über eine lokale Kopplungs-Vorrichtung mit einem Mittel der Vorrichtungs-Hauptansprüche implementiert).

Dementsprechend betrachtet diese Schrift insbesondere ihre abstrakte Netsurfing-Vorrichtung aus abstrakten HW-ISW-Funktionskomponenten bestehend, wobei diese Zuordnung einer funktionalen Netsurfing-Vorrichtungs-Komponente zur HW/SW völlig irrelevant ist. Wichtig ist lediglich, dass die abstrakte Realisierung der funktionalen Komponenten einer abstrakten Netsurfing-Vorrichtung mittels
■ eigenständiger funktionaler Netsurfing-Vorrichtungs-HW-/SW-Komponenten oder
■ funktionsgleicher und/oder funktional geeigneter Endsystem/IAD-HWI-SW-Komponenten oder
■ funktionsgleicher und/oder funktional geeigneter HW-/SW-Komponenten anderer Systeme (etwa eines Betriebssystems und von diesem verwaltete funktionale HW-Komponenten) erfolgen kann.
Abgesehen vom ersten Fall erfolgt also ein "abstraktes HW/SW resource sharing" zwischen Wsurfing-Vorrichtungs-Komponenten und funktionalen Komponenten der anderen genannten Systeme. Dieses abstrakte HW/SW resource sharing kann sich in einer materiellen Implementierung alias Ausführungsform dieser Wsurfing-Vorrichtung wieder finden oder nicht und heißt im ersten Fall "materielles HW/SW resource sharing". D.h.: Eine abstrakte Realisierung einer Netsurfing-Vorrichtung in einem abstrakten Netsurfing-Vorrichtungs-Endsystem/-IAD kann dort jeweils funktionsgleiche oder funktionsgeeignete abstrakte HW/SW-Komponenten z.B. eines Betriebssystems (und von diesem verwaltete abstrakte HW-Komponenten) per abstraktem resource sharing mitbenutzen.

Im Umkehrschluss: Eine abstrakte Implementierung einer Netsurfing-Vorrichtung, die ein vom Netsurfing-Verfahren zu unterstützendes abstraktes Endsystem/IAD ergänzen soll, benötigt dazu u.U. überhaupt keine HW-Erweiterungen dieses abstrakten Endsystems/IADs, da dessen abstrakte HW-Komponenten für diese abstrakte Vorrichtungs-Implementierung ausreichen, d.h. diese mittels "abstraktem HW resource sharings" mit dem zu unterstützenden abstrakten Endsystem/IAD bewerkstelligt werden kann. Dies kann dann auch für eine materielle Implementierung dieses Netsurfing-Vorrichtungs-Endsystems/IADs mittels eines materiellen Endsystems/IADs und dessen materiellen HW-Komponenten gelten.

Die vorstehende Diskussion um die Modellierung der abstrakten HW-/SW-Komponenten der Mittel einer Netsurfing-Vorrichtung dient zur Verdeutlichung der rein funktionalen Art der Anspruch-Wortlaut/- Sinngehalt-gemäßen Mittel - anhand deren Verwirklichung durch eine konkrete "Netsurfing-verdächtige" Ausführungsform zu entscheiden ist, ob letztere in den Schutzbereich dieser Schrift eingreift oder nicht.

Diese Patentanmeldung zielt derzeit primär ab auf Ausführungsformen des/der Netsurfing-Verfahrens/- Vorrichtung, die hinsichtlich ihrer materiellen HW-Komponenten vollständig Implementiert sind mittels der materiellen HW-Komponenten der materiellen Endsysteme/IADs, die von solchen Ausführungsformen unterstützt werden (sollen) - d.h. insgesamt nur zusätzliche (Netsurfing-Vorrichtungs-bedingte) materielle SW-Komponenten umfassen. Die materielle Implementierung einer derartigen Netsurfing-Vorrichtung beruht folglich auf deren materiellem Resource Sharing ihrer materiellen HW-Komponenten mit denen der unterstützten materiellen Endsysteme/IADs.

Dass die materielle Implementierung des Netsurfing-Verfahrens vollständig mittels materieller SW-Komponenten möglich ist, ist für den maßgeblichen Fachmann elementar. Und er sieht auch sofort, dass alle Mittel eines Netsurfing-Vorrichtungs-Anspruchs materiell mittels SW-Komponenten implementierbar sind - sofern sie nicht auf den abstrakten HW-Komponenten der **Abbildung 5** beruhen, die ihrerseits per materiellem Resource Sharing materiell implementierbar sind (siehe oben). Der Schutzbereich dieser Patentanmeldung ist aber nicht auf solche speziellen Ausführungsformen beschränkt, sondern diese dürfen ggf. zusätzliche Netsurfing-spezifisch HW-Komponenten beinhalten.

### D. Weitergehende Beschreibungen der Erfindung

Dieser Abschnitt D. soll vermeiden helfen, dass der Sinngehalt und/oder Schutzbereich der vorliegenden Patentanmeldung aus ihren sehr limitierten Beispiels-Ausführungsformen ermittelt und darauf beschränkt wird - was zwar "patentlogisch" abwegig und vor allem patentrechtlich strikt unzulässig ist, aber trotzdem den Verfassern dieser Schrift bei anderen ihrer Patente in Rechtsstreitigkeiten widerfuhr und deshalb die Abfassung dieser Patentanmeldung sehr stark prägt - und nicht aus ihrem absichtlich abstrakt angelegten und daher viel weiterreichenden Anspruchswortlaut. Der Primat der Interpretationsweise, d.h. des Sinngehalt-Bestimmungsverfahrens, eines Patents aus dessen Anspruchswortlauten (geg enüber allen anderweitigen Möglichkeiten einer/s Interpretationsweise/ Sinngehalt-Bestimmungsverfahrens eines Patents) ist nämlich in allen Patentrechtsnormen unmissverständlich festgelegt.

Aus diesen beiden Gründen beschreibt Abschnitt **D**. nachfolgend das Wesen der Erfindung der vorliegenden Patentanmeldung auch mittels einer etwas aufwändigen Erläuterung ihrer Verfahrens-Ansprüche. Eine nochmalige und vergleichbar aufwändige Kommentierung der Vorrichtungs-Ansprüche erscheint danach nicht erforderlich. Abschnitt **D**. ist also Teil der Beschreibung des/der erfindungsgemäßen Verfahrens/Vorrichtung.

Zu Beginn sei an drei - teilweise in dieser Schrift bereits angesprochene - Aspekte erinnert:
■ Die einzelnen Merkmale des/der erfindungsgemäßen Verfahrens/Vorrichtung unterliegen keiner in dieser Schrift nicht genannten Beschränkung - insbesondere keiner Beschränkung durch einen "Gesamtzusammenhang" der einzelnen Merkmale des/der erfindungsgemäßen Verfahrens/Vorrichtung, von wem ein solcher "Gesamtzusammenhang" auch immer gemutmaßt und wie auch immer er konstruiert sei, da er mit keinem Wort dieser Schrift zu rechtfertigen wäre.
■ Da alle Anspruchswortlaute/-sinngehalte dieser Patentanmeldung diese Merkmale des/der erfindungsgemäßen VerfahrensNorrichtung einzig und allein in ihrem Wesen definieren, besagt diese Schrift absolut nichts zu den materiellen Implementierungs-Varianten dieser Merkmale in irgend einer Ausführungsform der Erfindung - vielmehr sind diese Merkmale "funktional" alias "abstrakt", also "rein begrifflich".
■ In dieser Schrift (einschließlich ihrer Ansprüche) steht die Silbe "ein" (bei fehlendem "mindestens") und alle deren Konjugationen/Deklinationen/Variationen für "mindestens ein" - wo immer diese Substitution nur irgendwie sinnvoll möglich ist.

Nun zum Anspruch 1 und 2: Deren erster Absatz legt die fundamentalen Termini/Merkmale der TK-Anordnungen fest, mit der das Wsurfing-Verfahren arbeitet.
■ Hierzu sei zum einen daran erinnert, dass in dieser Patentanmeldung eine Anspruch-1/2-gemäße OC0 (siehe Abschnitt **C**.) nur potentiell zu sein braucht. Ein bekanntes Beispiel hierfür ist eine OSI-Connection, die begrifflich zustande kommt spätestens mit der Entscheidung eines TLNs, einen Anruf bei irgendeiner Notrufnummer, etwa bei 110 oder 112 zu starten - d.h. sie besteht (in potentieller Weise) von dem Moment an, zu dem der (abstrakte) TLN (als Teils des abstrakten Endsystems A0) daran denkt, sie anzurufen. Ein anderes Beispiel hierfür ist eine potentielle OSI-Verbindung zwischen dem A0-Teilnehmer und einem potentiellen Z0-Teilnehmer, für den ersterer erreichbar sein möchte wenn letzterer ihn anruft, wobei für den Zeitpunkt des MHOs angenommen wird, dass es einen solchen Z0-Teilnehmer schon gäbe - eine Annahme, deren Berechtigung hier irrelevant (aber nicht unberechtigt) ist. Im Falle der Benutzung der IP-TV-Kommunikationsanwendung besteht deren potentielle OC0 spätestens, sobald der Benutzer von A0 darauf eine "Programm-Auswahl" vornimmt.
   Dabei ist auch auf eine unwirksame Wortlautverkürzung in dieser Schrift hinzuweisen: Wenn von einem "TKV zwischen A0 und Z0 gesprochen wird, so ist damit stets zu verstehen ein "TKV zwischen je einem dessen mindestens einen Teilnehmer in A0 und Z0"
■ Zum anderen sind bereits hier Merkmale
   o im Anspruch 1 einer "MHO-GeMa" und
   o im Anspruch 2 des Relayings der A0-OC0
   genannt, die keines der Verfahren des Standes der HO-Technik oder der Internet-Mobilitäts-Technik verwirklicht: Derartige HO-Management-Merkmale waren bisher völlig unbekannt (siehe dazu Abschnitt **A**. und **C**.).

Auch zu den Schritten **a)-b)** im Anspruch 1 und 2 sind kurze Erläuterungen angebracht, wobei a priori klar sein sollte, dass es weitere - in **a)-b)** nicht genannte aber für den maßgeblichen Fachmann offensichtliche - und deshalb hier nicht nennenswürdige Schritte gibt, die das Netsurfing erfordert.
■ Die Ausführung eines Anspruch-1/2-gemäßen MHO von A0 an ein Netx wird gestartet in der mindestens einmaligen Ausführung des Prüf-Schritts **a)** durch dessen Feststellung des *"Vorliegens eines Erreichbarkeits-Signals von A0 am Netx".* Da die vorangehenden Beschreibungen der Erfindung dies nirgends beschränken, ist der Sinngehalt dieses Wortlauts **a)** genau der intuitiv nahe liegende: Es gibt ein Signal - irgend einer Art und irgendwo irgendwie festgestellt - dessen Vorliegen besagt: A0 kann im Netx, weil A0 dort eingecheckt/eincheckbar ist, mittels dessen IADx bzw. BSx und seinen homeMIAD0 mit allen Endsystemen am gesamten Internet kommunizieren und ist von denen im Netx erreichbar (siehe Anfang **B**. und Ende **C**.).
■ Eine abstrakte oder materielle Implementierung der Schritte **a)-b)** kann deren beliebige zeitliche Überlappung vornehmen - der maßgebliche Fachmann weiß z.B., dass ein separiertes Vorab-Prüfen in **a)** nicht erforderlich ist um **a)** und **b)** auszuführen. Insbesondere kann Wortlaut-/Sinngehalt-gemäß ein einmaliges oder mehrmaliges Ausführen der Prüfung **a)** erfolgen.
■ Die Anspruch-1-oder-2-gemäße Ausführung eines MHO kann in einer materiellen Implementierung - zusätzlich zu den Schritten **a)-b) -** weitere Schritte voraussetzen/implizieren/nutzen, die gegebenenfalls automatisiert erfolgen können und/oder weitere oder alternative optionale MHO-Ma umfassen, wie etwa zur Benutzung von IP-TV. D.h.: Anspruch 1 und 2 sagen absolut nichts zu irgendwelchen Fragen der materiellen Implementierung ihrer Verfahren, z.B. wann und wie und unter welchen Bedingungen das tatsächliche Einchecken von A0 in Netx erfolgen kann und/oder muss. Für den maßgeblichen Fachmann ist aber klar, dass u.U. keiner der für ein Einchecken erforderlichen Verfahrens-Schritte ausgeführt sein muss, damit das MHO **a)-b)**-gemäß gestartet und/oder durchgeführt und/oder abgeschlossen werden kann (wie es insbesondere bei der Implementierung von Internet IPv6 auf Endsystemen/IADs/BSs/.... möglich werden dürfte). D.h.: Das Net/-Wsurfing-Verfahren kann vollständig und mehrfach ablaufen, obwohl der Netsurfer bzw. sein Endsystem überhaupt nirgends eingecheckt ist oder jedenfalls nicht bei dem es ggf. prophylaktisch ausführenden realen oder virtuellen verteilt oder lokal implementierten IADx/BSx. Gleiches gilt für dessen/deren prophylaktisches Herstellen und/oder Beibehalten einer kompletten oder teilweisen Netsurfing-Verbindung NSC0 für A0 und die A0-OCO und/oder IP-TV-Verbindung und/oder andere optionale MHO-Ma-Verbindungen für A0 (z.B. für irgendwelche Sicherheits-relevanten Hinweise an dessen Benutzer und/oder dessen Sicherheits-Betreuer an anderer Stelle) vor dem Ein- und/oder Auschecken von A0 beim Netx, wobei der A0-Benutzer von solcher Prophylaxe erfährt und/oder Gebrauch macht oder nicht.
   Für den maßgeblichen Fachmann ist also keine derartige Variante des erfindungsgemäßen Verfahrens, von denen nur einige hier beispielhaft explizit angesprochen sind, vom Anspruch-1/2-Wortlaut/Sinngehalt und dessen Beschreibung in dieser Patentanmeldung ausgeschlossen. Das heißt, dass der Anspruch-1/2-Wortlaut/Sinngehalt - jedenfalls wegen dieser Beschreibung des erfindungsgemäßen Verfahrens - alle derartigen Varianten umfasst.
■ Das Anspruch-1-gemäße Wsurfing-Verfahren gestattet beide Relaying-Verfahren einzusetzen (sowohl das T unnel-freie Relaying als auch das Tunnel-Relaying, siehe dazu Anspruch 3), beinhaltet also keine "Tunnel-Freiheits"-Beschränkung dafür. Jedoch unterliegt sein MHO einer Beschränkung gegenüber dem Anspruch 2 insofern, als es eine GeMa und deren CI-Korrelation verwirklichen muss. Diese Beschränkungen treten jedoch in der Praxis nicht als solche in Erscheinung, sondern als Vorteil des Netsurfing-Verfahrens (siehe Abschnitt C. zur Vorteilhaftigkeit einer GeMa und deren Cl-Korrelation in einem MHO).
■ Ein abstraktes Relaying bezieht sich auf jedes in A0-OC0 übertragene Bit. Aber wohl jede materielle Implementierung des Netsurfing-Verfahrens wird so vorgehen, dass sie die Verwirklichung dieses "Tunnel-frei"-Relay-Merkmals nur bei gewissen Bedingungen (etwa Volumen in der A0-OC0 übertragener Information) sicherzustellen braucht. Der maßgebliche Fachmann weiss, wie diese geschieht und unter welchen Bedingungen und warum dies vernünftig ist.
■ Hinsichtlich des Anspruch-1-/-2-Wortlauts/Sinngehalts sei schließlich noch angemerkt, dass
   o die Varianten der abstrakten oder materiellen Implementierung eines "*MHOS0-gemäßen Managements einer HO-Ausführung*" (unter der Kontrolle des realen oder virtuellen homeMIAD0, lokal oder verteilt implementiert, und deren jeweiligen MHOS-Anteilen), jedenfalls nach den vorausgehenden Erläuterungen, dem maßgeblichen Fachmann bekannt und damit hier irrelevant sind - dass es also hinsichtlich seiner abstrakten oder materiellen Implementierung in absolut keiner Weise beschränkt ist, und
   o die "*zusätzliche Geschäfts-Kommunikation*"
      ❖ weder einen zusätzlichen PDU-Austausch erfordert (sondern sie mittels eines ohnehin erforderlichen PDU-Austauschs erfolgen kann),
      ❖ noch beschränkt ist hinsichtlich des von ihr benutzten Netzes (also ein anderes Netz benutzen kann als das ohnehin benutzte).

Hinsichtlich des Schutzbereichs des Anspruchs 1 oder 2 impliziert dies insbesondere: S obald eine Ausführungsform mittels irgendeines (vermeintlichen) Nicht-MHOMs (der in dieser Schrift in keiner Weise beschränkt wird) das Vorliegen eines **a)**-gemäßen Signals feststellt und dadurch die erfolgreiche Durchführung des Schritts b) auf irgend eine Weise herbeigeführt wird, greift sie (gemeinschaftlich mit diesem Nicht-MHOM) in deren Schutzbereich ein.

Mittels der fünf **Abbildungen 6a-e** werden noch einige grundsätzliche Klarstellungen hinsichtlich TK-Anordnungen vorgenommen, in denen das Net/-Wsurfing-Verfahren anwendbar ist, in denen dessen MHOM und/oder dessen virtueller oder realer homeMIAD und/oder dessen MHOS abstrakt oder materiell verteilt implementiert sind. Der Einfachheit halber wird in der **Abbildung 6a** davon ausgegangen, ein System S0 mit einem Teil eines virtuellen homeMIADs könne nur KoMa und ein System S1 mit einem anderen Teil eines virtuellen homeMIADs nur GeMa (beide beides in Gänze) steuern und ggf. ausführen. Die drei **Abbildungen 6b-d** unterscheiden sich von ihr lediglich insofern, als in **6b-c** je eine dieser beiden und in 6d beide MHO-Ma-Arten in einem realen homeMIAD0 angesiedelt sind. Dabei beachte man, dass S0 und/oder S1 und ihre virtuellen homeMIAD-Teile (in den **Abbildungen 6a-c)** in einem TK-Netz angesiedelt sein können, dessen Betreiber dann also das Wsurfing-Verfahren unterstützt - sodass dann in diesen Fällen ein ggf. weiteres reales homeMIAD funktional einfacher angelegt sein kann, als in **Abbildung 6d****,** insbesondere ein heute installiertes sharedIAD sein kann (siehe unten). Selbstverständlich gibt es eine Vielzahl von Mischformen dieser prototypischen TK-Anordnungen für ein/e Netsurfing-VerfahrenNorrichtung - die mit dem Anspruch-1-/-2-Wortlaut/Sinngehalt und der vorstehen-den Beschreibung offenbart sind. Dies zusammenfassend: Sämtliche Formen oder Strukturen von abs-trakten und/oder materiellen verteilten Implementierungen des erfindungsgemäßen Verfahrens sind für den maßgeblichen Fachmann mit dieser Beschreibung vom Anspruch-1-/-2-Wortlaut/Sinngehalt erfasst.

Von nahe liegendem wirtschaftlichem Interesse ist, wie bereits angesprochen, die hinsichtlich des erfindungsgemäßen Verfahrens vollständige Integration eines homeMIAD in ein Netz - sei es ein TK-Netz oder ein großes WLAN - oder z.B. in einen Netz-Server, weil so eine "funktionale Aufrüstung" vieler bereits installierter nicht-Wsurfing-fähiger IADs um die Netsurfing-Funktionalität einfach erzielt werden kann (= kompletter "virtueller homeMIAD-Server"). Die **Abbildung 6e** zeigt diese TK-Anordnung mit einem großen WLAN und einem einzigen virtuellen homeMIAD-Server. Um die gewünschte "homeMIAD-Privacy" in diesem Fall zu erhalten - d.h. um sicherzustellen, dass der den virtuellen homeMIAD-Server bewirtende Netz- oder Server-Betreiber/Manager keinen Zugriff auf die bewirteten virtuellen homeMIADs erhält - muss die Kommunikation eines Betreibers/Managers eines solchen virtuellen homeMIADs für den Netz-/Server-Betreiber/Manager ebenso unverständlich bleiben wie die - auf Grund dieser Kommunikation - in einem solchen virtuellen homeMIAD gespeicherte MHOS dafür. Der maßgebliche Fachmann weiß, wie dies bewerkstelligt werden kann, sowohl in einer abstrakten als auch ein einer materiellen verteilten oder zentralisierten Implementierung eines/einer Netsurfing-Verfahrens/Vorrichtung, d.h. dessen/deren homeMIAD, dessen MHOS, deren MHOM und der ausführenden Funktionsmoduln.

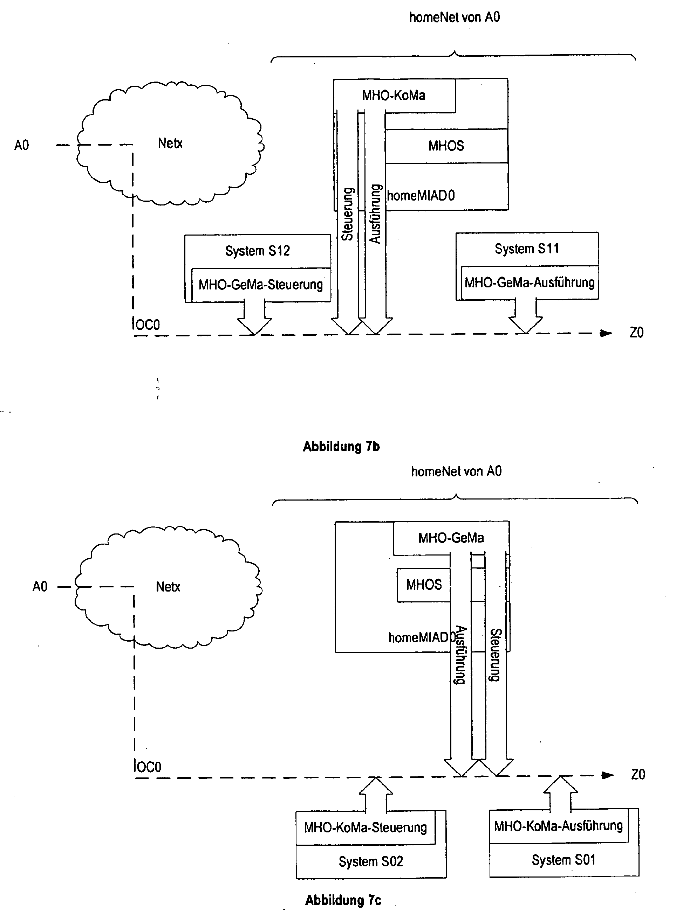

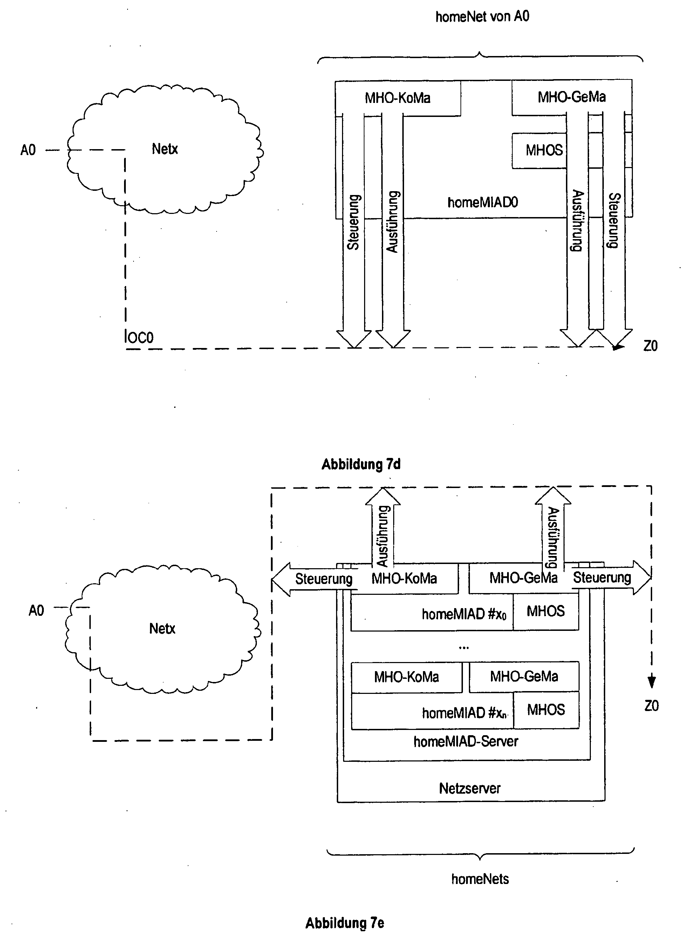

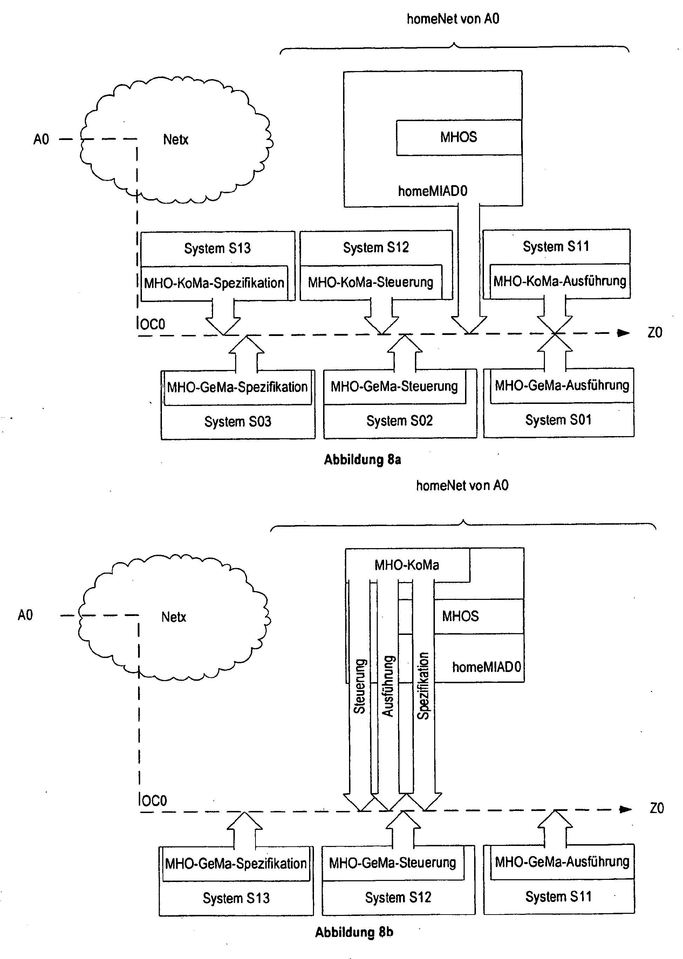

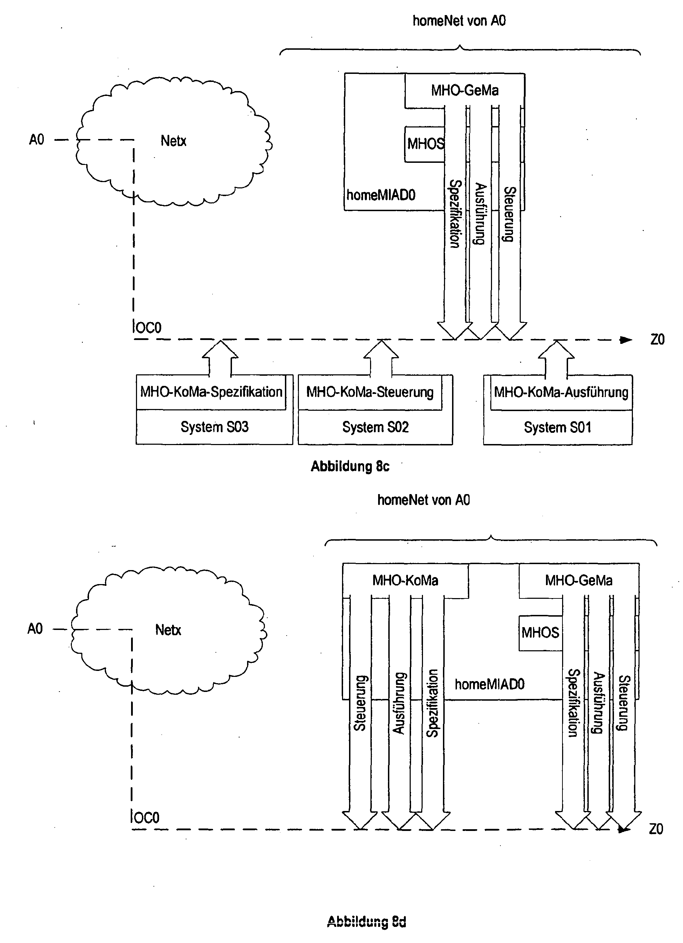

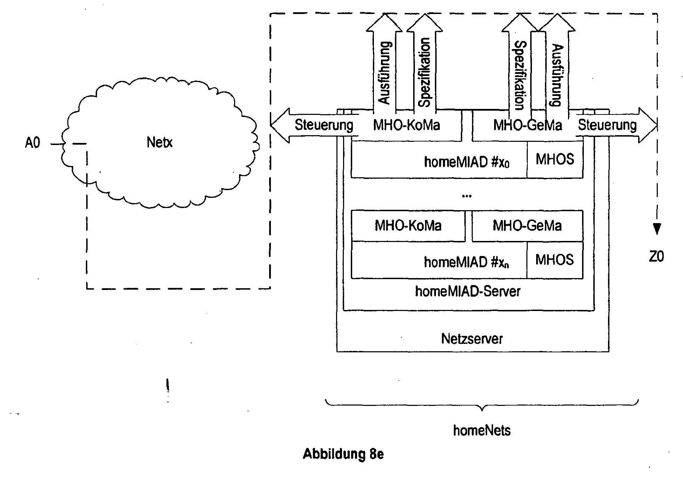

Die **Abbildungen 6** skizzieren also mögliche Trennungen - d.h. mögliche verteilte Implementierungen - nur der für MHOs benötigten GeMa- von anderen MHO-Ma-Funktionalitäten. Die **Abbildungen 7a-e** skizzieren für jede von ihnen eine mögliche Trennung - d.h. mögliche verteilte Implementierung - deren homeMIAD0-Steuerungsfunktion von einem zugehörigen ausführenden Funktionsmodul in einem anderen System, also alles die Implementierung der MHOS noch nicht verteilend. Die **Abbildungen 8a-e** skizzieren deshalb für jede der MHO-Ma-Funktionalitäten eine mögliche Trennung ihrer homeMIAD0-Steuerungsfunktionen von mindestens einem sie steuernden Teil der MHOS, durch deren Verteilung auf zwei Systeme. In diesem Sinne kann mindestens ein Teil einer MHOS selbst als ausführbar angesehen werden, interpretierbar ist er jedenfalls.

Solche geeigneten verteilten - letztendlich materiellen - Implementierungen erleichtern Betreibern von großen Netzen oder Intemet-Servem, auf der Grundlage des erfindungsgemäßen Verfahrens die unterschiedlichsten innovativen Multimedia-TK-Dienste in allen möglichen Kooperationen, z.B. mit sharedWLAN-Betreibern und/oder IP-TV-Programm-Erbringern anzubieten.

Danach ist insbesondere klar, dass das "aufweist" in den Anspruchswortlauten nicht beschränkt werden darf auf "jetzt enthält/umfasst" - sondern für ein solches "aufweist" auch die anderen sinnvollen Interpretationsmöglichkeiten natürlicher Sprache in diesem Zusammenhang gelten, z.B. "im Zusammenhang steht mit" und/oder "zu beachten/befolgen hat" und dies auch die Zukunft umfasst.

## Patentansprüche

1. Verfahren ur Bereitstellung von Information, wobei ein erstes Endsystem (A0) und ein zweites Endsystem (Z0) durch eine OSI-Verbindung verbunden sind, und wobei das erste Endsystem einem Heimatnetz zugeordnet ist, das ein Managing Integrated Access Device (home IAD0) aufweist, das die folgenden Schritte durchführt:
- in Abhängigkeit von und bei Vorliegen eines potentiellen oder aktuellen Handovers, Bereitstellen von Convenience-Information über die Durchführung des potentiellen oder aktuellen Handovers bei beiden Endsystemen vor oder zu Beginn des Handovers,
- Bereitstellen des Weiteren einer Geschäfts-Kommunikation zu einer Geschäftsmaßnahme an dem ersten und/oder zweiten Endsystem,
- wobei das Bereitstellen der Geschäfts-Kommunikation korreliert erfolgt mit der Bereitstellung der Convenience-Information.

2. Verfahren nach Anspruch 1, **dadurch gekennzeichnet, dass** die Geschäfts-Kommunikation die Kommunikation eines werblichen Hinweises an das erste Endsystem und/oder das zweite Endsystem betrifft.

3. Verfahren nach Anspruch 1 oder 2, **dadurch gekennzeichnet, dass** durch das Managing Integrated Access Device einem Endsystem nach oder gleichzeitig mit einem Audiosignal textuelle oder grafische Informationen nebenläufig bereitgestellt werden, ohne die Audio-Information zu beeinträchtigen.

4. Verfahren nach einem der vorangehenden Ansprüche, **dadurch gekennzeichnet, dass** das erste Endsystem ein WiFi-Telefon ist.

5. Verfahren nach einem der vorangehenden Ansprüche, **dadurch gekennzeichnet, dass** das zweite Endsystem ein Telefon ist.

6. Verfahren nach einem der vorangehenden Ansprüche, **dadurch gekennzeichnet, dass** die Geschäfts-Kommunikation zu der Geschäftsmaßnahme ohne die Verwendung einer Tunneling-Technik realisiert wird.

7. Verfahren nach einem der vorangehenden Ansprüche, **dadurch gekennzeichnet, dass** das Bereitstellen einer Geschäfts-Kommunikation zu der Geschäftsmaßnahme des weiteren korreliert erfolgt mit der Bereitstellung durch das Managing Integrated Access Device einer Kontrollmaßnahme, die eine Zulässigkeits-Überwachung der Benutzung des Heimatnetzes des ersten Endsystems steuert und vollzieht.

8. Managing Integrated Access Device (home IAD0) zur Durchführung des Verfahrens gemäß Anspruch 1 mit Mitteln, die derart ausgebildet und angepasst sind, dass das Managing Integrated Access Device dazu geeignet ist, folgende Schritte durchzuführen:
- in Abhängigkeit von und bei Vorliegen eines potentiellen oder aktuellen Handovers, Bereitstellen von Convenience-Information über die Durchführung des potentiellen oder aktuellen Handovers bei zwei Endsystemen (A0,Z0) die durch eine OSI-Verbindung verbunden sind, vor oder zu Beginn des Handovers,
- Bereitstellen des weiteren eine Geschäfts-Kommunikation zu einer Geschäftsmaßnahme an dem ersten (A0) und/oder zweiten Endsystem (Z0);
- wobei das Bereitstellen der Geschäfts-Kommunikation korreliert erfolgt mit der Bereitstellung der Convenience-Information.

9. Managing Integrated Access Device nach Anspruch 8, **dadurch gekennzeichnet, dass** die Mittel derart ausgebildet und angepasst sind, dass die Geschäfts-Kommunikation die Kommunikation eines werblichen Hinweises an das erste Endsystem und/oder das zweite Endsystem betrifft.

10. Managing Integrated Access Device nach Anspruch 8 oder 9, **dadurch gekennzeichnet, dass** die Mittel derart ausgebildet und angepasst sind, dass einem Endsystem nach oder gleichzeitig mit einem Audiosignal textuelle oder grafische Informationen nebenläufig bereitgestellt werden, ohne die Audio-Information zu beeinträchtigen.

11. Managing Integrated Access Device nach einem der Ansprüche 8 bis 10, **dadurch gekennzeichnet, dass** die Mittel derart ausgebildet und angepasst sind, dass das Managing Integrated Access Device die genannten Schritte durchführt, wenn das erste Endsystem ein WiFi-Telefon ist.

12. Managing Integrated Access Device nach einem der Ansprüche 8 bis 11, **dadurch gekennzeichnet, dass** die Mittel derart ausgebildet und angepasst sind, dass das Managing Integrated Access Device die genannten Schritte durchführt, wenn das zweite Endsystem ein Telefon ist.

13. Managing Integrated Access Device nach einem der Ansprüche 8 bis 12, **dadurch gekennzeichnet, dass** die Mittel derart ausgebildet und angepasst sind, dass die Geschäfts-Kommunikation zu der Geschäftsmaßnahme ohne die Verwendung einer Tunneling-Technik realisiert wird.

14. Managing Integrated Access Device nach einem der Ansprüche 8 bis 13, **dadurch gekennzeichnet, dass** die Mittel derart ausgebildet und angepasst sind, dass das Bereitstellen einer Geschäfts-Kommunikation zu der Geschäftsmaßnahme des weiteren korreliert erfolgt mit der Bereitstellung durch das Managing Integrated Access Device einer Kontrollmaßnahme, die eine Zulässigkeits-Überwachung der Benutzung des Heimatnetzes des ersten Endsystems steuert und vollzieht.

## Claims

1. A method for providing information, wherein a first terminal system (A0) and a second terminal system (Z0) are connected by way of an OSI connection, and wherein the first terminal system is assigned to a home network, which comprises a managing integrated access device (homeIAD0), which executes the following steps:
• dependent on and with the presence of a potential or actual handover providing convenience information about the execution of the potential or actual handover at both terminal devices before or at the start of the handover,
• furthermore providing a commercial communication about a commercial measure at the first and/or the second terminal system,
• whereby the provision of the commercial information occurs in correlation with the provision of the convenience information.

2. A method according to claim 1, **characterized in that** the commercial communication relates to the communication of a promotional notice to the first and/or the second terminal system.

3. A method according to claim 1 or 2, **characterized in that** a terminal system is provided textual or graphical information by the managing integrated access device, concurrently after or at the same time of an audio signal, without affecting the audio information.

4. A method according to any of the previous claims, **characterized in that** the first terminal system is a WiFi telephone.

5. A method according to any of the previous claims, **characterized in that** the second terminal system is a telephone.

6. A method according to any of the previous claims, **characterized in that** the commercial communication about the commercial measure is implemented without using any tunneling technology.

7. A method according to any of the previous claims, **characterized in that** the provision of a commercial communication about the commercial measure furthermore takes place correlated to the provision of a control measure by the managing integrated access device, which controls and executes a monitoring of the legitimacy in regard to the usage of the home network of the first terminal device.

8. A managing integrated access device (homeIAD0) for executing the method according to claim 1 with means which are designed and adapted in such a way that the managing integrated access device is suited to execute the following steps:
• dependent on and with the presence of a potential or actual handover
• providing convenience information about the execution of the potential or actual handover at two terminal devices (A0, Z0) which are connected by way of an OSI connection before or at the start of the handover,
• furthermore providing a commercial communication about a commercial measure at the first (A0) and/or the second terminal system (Z0),
• whereby the provision of the commercial information occurs in correlation with the provision of the convenience information.

9. A managing integrated access device according to claim 8, **characterized in that** the means are designed and adapted in such a way that the commercial communication relates to the communication of a promotional notice to the first and/or the second terminal system.

10. A managing integrated access device according to claim 8 or 9, **characterized in that** the means are designed and adapted in such a way that a terminal system is provided textual or graphical information, concurrently after or at the same time of an audio signal, without affecting the audio information.

11. A managing integrated access device according to claim 8 to 10, **characterized in that** the means are designed and adapted in such a way that the managing integrated access device executes the mentioned steps if the first terminal system is a WiFi telephone.

12. A managing integrated access device according to claim 8 to 11, **characterized in that that** the means are designed and adapted in such a way that the managing integrated access device executes the mentioned steps if the second terminal system is a telephone.

13. A managing integrated access device according to claim 8 to 12, **characterized in that that** the means are designed and adapted in such a way that the commercial communication about the commercial measure is implemented without using any tunneling technology.

14. A managing integrated access device according to claim 8 to 13, **characterized in that** the means are designed and adapted in such a way that the provision of a commercial communication about the commercial measure furthermore takes place correlated to the provision of a control measure by the managing integrated access device, which controls and executes a monitoring of the legitimacy in regard to the usage of the home network of the first terminal device.

## Revendications

1. Procédé de préparation d'information, avec lequel un premier système terminal (A0) et un deuxième système terminal (Z0 sont reliés par une liaison OSI, et avec lequel le premier système terminal (A0) est associé à un réseau résidentiel qui comporte un dispositif d'accès intégré de gestion (home IAD0) qui exécute les étapes suivantes consistant à :
- en fonction de la présence et en présence d'un transfert potentiel ou actuel, préparer une information de confort sur l'exécution du transfert potentiel ou actuel pour les deux systèmes terminaux avant le transfert ou au début du transfert,
- préparer en outre une communication commerciale pour une mesure commerciale dans le premier et/ou le deuxième système terminal,
- la préparation de la communication commerciale ayant lieu de manière corrélée avec la préparation de l'information de confort.

2. Procédé selon la revendication 1, **caractérisé en ce que** la communication commerciale concerne la communication d'un avis publicitaire au premier système terminal et/ou au deuxième système terminal.

3. Procédé selon la revendication 1 ou 2, **caractérisé en ce que** le dispositif d'accès intégré de gestion prépare en parallèle pour un système terminal des informations textuelles ou graphiques après un signal audio ou simultanément à un signal audio, sans influencer les informations audio.

4. Procédé selon l'une quelconque des revendications précédentes, **caractérisé en ce que** le premier système terminal est un téléphone WiFi.

5. Procédé selon l'une quelconque des revendications précédentes, **caractérisé en ce que** le deuxième système terminal est un téléphone.

6. Procédé selon l'une quelconque des revendications précédentes, **caractérisé en ce que** la communication commerciale pour la mesure commerciale est réalisée sans employer une technique de tunnellisation.

7. Procédé selon l'une quelconque des revendications précédentes, **caractérisé en ce que** la préparation d'une communication commerciale pour la mesure commerciale a lieu en outre de manière corrélée avec la préparation par le dispositif d'accès intégré de gestion d'une mesure de contrôle qui commande et exécute une surveillance d'admissibilité portant sur l'utilisation du réseau résidentiel du premier système terminal.

8. Dispositif d'accès intégré de gestion (home IAD0) destiné à exécuter le procédé selon la revendication 1 avec des moyens qui sont formés et adaptés de manière telle que le dispositif d'accès intégré de gestion soit approprié pour exécuter les étapes suivantes consistant à :
- en fonction de la présence et en présence d'un transfert potentiel ou actuel, préparer une information de confort sur l'exécution du transfert potentiel ou actuel pour les deux systèmes terminaux (A0, Z0) qui sont reliés par une liaison OSI, avant le transfert ou au début du transfert,
- préparer en outre une communication commerciale pour une mesure commerciale dans le premier (A0) et/ou le deuxième système terminal (Z0)
- la préparation de la communication commerciale ayant lieu de manière corrélée avec la préparation de l'information de confort.

9. Dispositif d'accès intégré de gestion selon la revendication 8, **caractérisé en ce que**, les moyens sont formés et adaptés de manière telle que la communication commerciale concerne la communication d'un avis publicitaire au premier système terminal et/ou au deuxième système terminal.

10. Dispositif d'accès intégré de gestion selon la revendication 8 ou 9, **caractérisé en ce que** les moyens sont formés et adaptés de manière telle que des informations textuelles ou graphiques soient préparées pour un système terminal après un signal audio ou simultanément à un signal audio, sans influencer les informations audio.

11. Dispositif d'accès intégré de gestion selon l'une des revendications 8 à 10, **caractérisé en ce que** les moyens sont formés et adaptés de manière telle que le dispositif d'accès intégré de gestion exécute lesdites étapes si le premier système terminal est un téléphone WiFi.

12. Dispositif d'accès intégré de gestion selon l'une des revendications 8 à 11, **caractérisé en ce que** les moyens sont formés et adaptés de manière telle que le dispositif d'accès intégré de gestion exécute lesdites étapes si le deuxième système terminal est un téléphone.

13. Dispositif d'accès intégré de gestion selon l'une des revendications 8 à 12, **caractérisé en ce que** les moyens sont formés et adaptés de manière telle que la communication commerciale pour la mesure commerciale est réalisée sans employer une technique de tunnellisation.

14. Dispositif d'accès intégré de gestion selon l'une des revendications 8 à 13, **caractérisé en ce que** les moyens sont formés et adaptés de manière telle que la préparation d'une communication commerciale pour la mesure commerciale ait lieu en outre de manière corrélée avec la préparation par le dispositif d'accès intégré de gestion d'une mesure de contrôle qui commande et exécute une surveillance d'admissibilité portant sur l'utilisation du réseau résidentiel du premier système terminal.
